(19) Europäisches Patentamt
European Patent Office
Office européen des brevets

(11) **EP 2 941 087 B1**

(12) **EUROPEAN PATENT SPECIFICATION**

(45) Date of publication and mention
of the grant of the patent:
**10.04.2019 Bulletin 2019/15**

(51) Int Cl.:
***H04W 36/00*** *(2009.01)*   ***H04W 72/08*** *(2009.01)*
*H04W 36/04* *(2009.01)*   *H04W 72/04* *(2009.01)*

(21) Application number: **13871600.6**

(22) Date of filing: **18.01.2013**

(86) International application number:
**PCT/CN2013/070720**

(87) International publication number:
**WO 2014/110811 (24.07.2014 Gazette 2014/30)**

(54) **MULTI-CARRIER COMMUNICATION METHOD, APPARATUS, AND DEVICE**

MEHRTRÄGERKOMMUNIKATIONSVERFAHREN, -EINRICHTUNG UND -VORRICHTUNG

PROCÉDÉ, APPAREIL, ET DISPOSITIF DE COMMUNICATION À PORTEUSES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietor: **Huawei Technologies Co., Ltd.**
**Longgang District**
**Shenzhen, Guangdong 518129 (CN)**

(72) Inventors:
• **ZHANG, Yi**
  **Shenzhen**
  **Guangdong 518129 (CN)**
• **GUO, Fangfu**
  **Shenzhen**
  **Guangdong 518129 (CN)**
• **GUAN, Shiguo**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
EP-A2- 2 343 919     WO-A1-2011/083848
CN-A- 101 547 486    CN-A- 101 730 313
US-A1- 2009 270 103

• **QUALCOMM EUROPE: "Dual Carrier operation for CELL_DCH", 3GPP DRAFT; R1-081438, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080326, 26 March 2008 (2008-03-26), XP050109855, [retrieved on 2008-03-26]**
• **QUALCOMM INCORPORATED: "Hetnets for UMTS", 3GPP DRAFT; R1-123808_HETNETS FOR UMTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661661, Retrieved from the Internet: URL:http://www.3gpp.org/ftp/tsg_ran/WG1_RL 1/TSGR1_70/Docs/ [retrieved on 2012-08-05]**

**Description**

**TECHNICAL FIELD**

The present invention relates to the communications field, and more specifically, to a multi-carrier communication method, apparatus, and device.

**BACKGROUND**

Currently, a multi-carrier communication method is already available in which a user equipment (UE, User Equipment) can establish downlink connections simultaneously in two cells that have a same coverage area and operate on two carriers of different frequencies, thereby improving a downlink peak throughout rate and subscriber experience. The two cells with a same coverage area are covered by two antennas at a same geographic location (antennas at a same site) and form dual cells (DC, Dual Cell). In the following descriptions, for ease of understanding and description, a user equipment that supports this multi-carrier communication method is referred to as a DC terminal.

For example, US 2009/0270103A1 refers to Dual-cell or multi-cell Wireless Transmit Receive Units (WTRUS) configured to implement mobility procedures. The WTRU configurations implement methods to optimize and allow mobility for the procedures of cell search and cell reselection, measurement reporting and inter-frequency handovers, compressed mode measurements, and soft handovers.

In addition, to further improve capacity of a UMTS system, a mix of macro and micro cells at a same frequency can be networked, specifically, an intra-frequency micro cell can further be deployed inside one macro cell. In this way, a downlink throughput rate of the cell can be improved when a shortage of spectrum resources occurs.

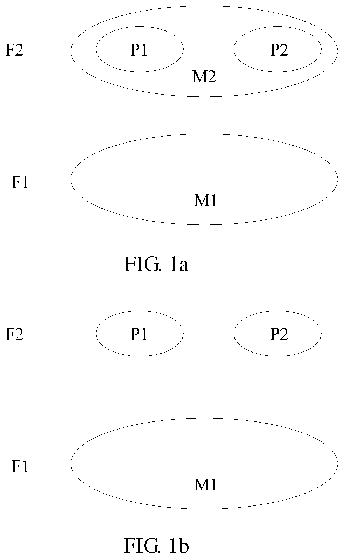

For example, a micro cell is deployed at only one frequency of two different frequencies. As shown in FIG. 1a, three cells M2, PI, P2 are deployed at a frequency F2; one cell, namely M1, is deployed at a frequency F1; M1 and M2, whose antennas are at a same geographic location and whose coverage areas are the same, may form a DC carrier group. It is assumed that a DC terminal uses F1 as a primary carrier and F2 as a secondary carrier and establishes downlink connections in M1 and M2. If the DC terminal enters, for example, P1, because the DC terminal still uses the M2 cell as a secondary-carrier cell and interference from P1 is relatively strong, the DC terminal has poor signal quality in the M2 cell, thereby making it impossible to accomplish a relatively high throughput rate and adversely affecting subscriber experience.

For another example, as shown in FIG. 1b, two cells P1 and P2 are deployed at a frequency F2; one cell M1 is deployed at a frequency F1. If a DC terminal selects the F2 frequency as a primary carrier, when the DC terminal enters, for example, P1, because a micro cell corresponding to P1 (a micro cell whose antenna is at a same geographic location as an antenna of P1) is unavailable in a system, the DC terminal will lose a multi-carrier connection and subscriber experience is affected.

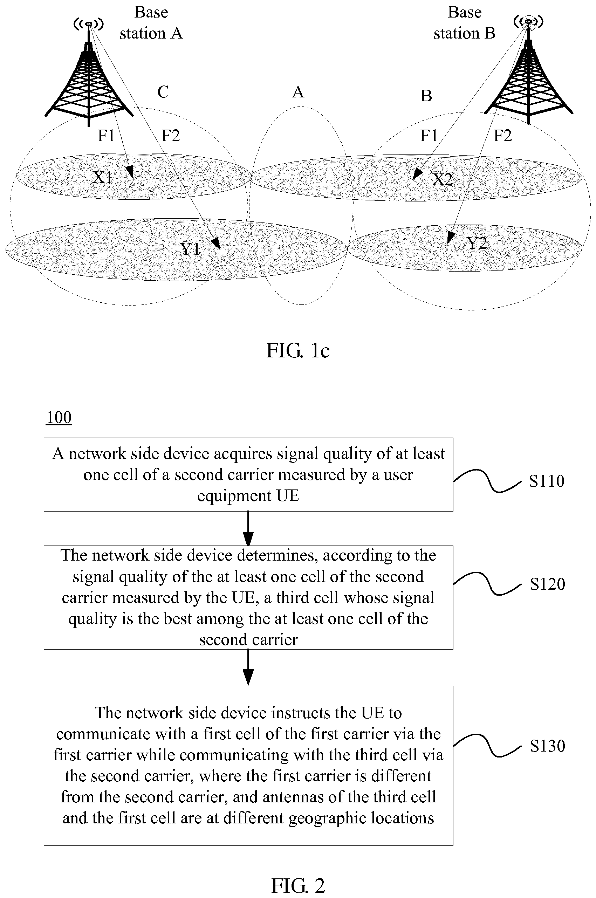

For another example, as shown in FIG. 1c, in an area A, geographic locations of antennas at F1 and F2 are different. Therefore, F1 and F2 cannot constitute a DC carrier group, a DC terminal will lose a multi-carrier connection, and subscriber experience is affected.

**SUMMARY**

Embodiments of the present invention provide a multi-carrier communication method, apparatus, and device, which can improve subscriber experience. Further, the above mentioned problems are solved by the subject matter of independent claims 1, 2 and 7. Further embodiments are described in the dependent claims.

According to the multi-carrier communication method, apparatus, and device in the embodiments of the present invention, a network side device determines, according to signal quality measured by a UE, a third cell whose signal quality is the best among at least one cell of a second carrier, and instructs the UE to communicate with a first cell of a first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

**BRIEF DESCRIPTION OF DRAWINGS**

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1a is a schematic diagram representing an example of an applicable scenario of a multi-carrier communication method according to an embodiment of the present invention;

FIG. 1b is a schematic diagram representing another example of an applicable scenario of a multi-carrier communication method according to an embodiment of the present invention;

FIG. 1c is a schematic diagram representing still another example of an applicable scenario of a multi-carrier communication method according to an embodiment of the present invention;

FIG. 2 is a schematic flowchart of a multi-carrier communication method according to an embodiment of the present invention;

FIG. 3 is a schematic flowchart of a multi-carrier communication method according to another embodiment of the present invention;

FIG. 4 is a schematic block diagram of a multi-carrier communication apparatus according to an embodiment of the present invention;

FIG. 5 is a schematic block diagram of a multi-carrier communication apparatus according to another embodiment of the present invention;

FIG. 6 is a schematic structure of a multi-carrier communication device according to an embodiment of the present invention; and

FIG. 7 is a schematic structure of a multi-carrier communication device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a global system for mobile communications (GSM, Global System for Mobile Communications), a code division multiple access (CDMA, Code Division Multiple Access) system, a wideband code division multiple access (WCDMA, Wideband Code Division Multiple Access) system, a general packet radio service (GPRS, General Packet Radio Service) system, and a long term evolution (LTE, Long Term Evolution) system.

In addition to above, there are at least two carriers (of different frequencies) in the communications system, where antennas of the at least two carriers are at different sites or at different geographic locations; in addition, the at least two carriers have an overlapping area, and a user equipment can detect the at least two carriers (of different frequencies) in the overlapping area. For example, as shown in FIG. 1a, a coverage area of P1 is located within a coverage area of M1. Therefore, the coverage area of P1 is an "overlapping area". For another example, as shown in FIG. 1c, an overlapping area between a carrier F1 from a base station B and a carrier F2 from a base station A is an area A.

A user equipment (UE, User Equipment), also referred to as a mobile terminal (Mobile Terminal), a mobile user equipment, and the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

A network side device may be a radio network controller RNC, radio network controller), or a combination of RNC and NodeB (NodeB), or a base station controller in GSM or CDMA, or a combination of base station controller and base transceiver station (BTS, Base Transceiver Station) in GSM or CDMA, or a base station controller in WCDMA, or a combination of NodeB (NodeB) and base station controller in WCDMA, or an evolved NodeB (eNB or e-NodeB, evolved NodeB) in LTE. The base station may be a micro-cell base station, or a micro (Micro), a pico (Pico), or a home base station, also called femto or access point (AP, Access Point), which is not limited in the present invention. For ease of understanding, the following uses an RNC as an example to describe actions taken by a network side device. It should be noted that the network side device in the embodiments of the present invention may control a user equipment to perform an action such as cell access, handover, or cell reselection, and the procedure of the action may be the same as in the prior art.

FIG. 2 shows a schematic flowchart of a multi-carrier communication method 100 from a perspective of a network side device (for example, an RNC) and according to an embodiment of the present invention. As shown in FIG. 2, the method 100 includes:

S110. The network side device acquires signal quality of at least one cell of a second carrier measured by a user equipment UE.

S120. The network side device determines, according to the signal quality of the at least one cell of the second carrier measured by the UE, a third cell whose signal quality is the best among the at least one cell of the second carrier.

S130. The network side device instructs the UE to communicate with a first cell of the first carrier via the first carrier while communicating with the third cell via the second carrier, where the first carrier is different from the second carrier, and antennas of the third cell and the first cell are at different geographic locations.

The multi-carrier communication method 100 in this embodiment of the present invention may be applied when the UE is a DC terminal, that is to say, the UE can simultaneously establish downlink connections only in two cells that have a same coverage area and operate on two carriers of different frequencies, where the two cells having the same coverage area are covered by two antennas at a same geographic location (two antennas at a same site).

Herein, it should be noted that "the UE can simultaneously establish downlink connections in two cells that have a same coverage area and operate on two carriers of different frequencies" means that the UE cannot establish downlink connections in two cells that operate at different frequencies and covered by antennas at different sites (two antennas at different geographic locations).

In this embodiment of the present invention, the method may further include:

the network side device acquires capability information of the UE, and determines that the UE is a UE with a multi-carrier capability. It should be noted that the UE with a multi-carrier capability may be, for example, a UE with a DC capability (a UE with a 2-carrier capability), a UE with a 3-carrier capability, a UE with a 4-carrier capability, a UE with a 6-carrier capability, or a UE with an 8-carrier capability. For diverse categories of terminals with a multi-carrier capability, refer to definitions in 3GPP R11 TS25.306, where category 21 to category 38 (category21-category38) are all HSDPA terminals with a multi-carrier capability. For ease of description, only a UE with a DC capability is used as an example for description in the embodiments of the present invention. An embodiment using a UE with another multi-carrier capability as an example is similar to this embodiment in which a UE with a DC capability is used as an example.

Specifically, for example, the UE may send, to an RNC (an example of the network side device), information indicating that the UE is a DC terminal, so that the RNC can determine that the UE is a DC terminal, and then can start a related procedure of the multi-carrier communication method 100 in this embodiment of the present invention. In addition, for example, the UE may add the information to one of the following messages and send (through a base station) the messages to the RNC: cell update (CELL UPDATE) message, initial direct transfer (INITIAL DIRECT TRANSFER) message, RRC connection setup request (RRC CONNECTION REQUEST) message, RRC connection setup complete (RRC CONNECTION SETUP COMPLETE) message, UE capability information (UE CAPABILITY INFORMATION), inter-system handover information (INTER RAT HANDOVER INFO), and the like.

It should be understood that the foregoing illustrated method whereby the network side device determines that the UE is a DC terminal is described by way of example only, and not by way of limitation. For example, the network side device may store a correspondence between whether the UE is a DC terminal and a subscriber identifier that uniquely identifies the UE, so that the network side device can determine, according to the subscriber identifier, whether the UE is a DC terminal. By way of example, the following may be used as the subscriber identifier: a mobile subscriber integrated service digital network number (MSISDN, Mobile Subscriber Integrated Services Digital Network), an international mobile subscriber identity (IMSI, International Mobile Station Subscriber Identity), and an international mobile equipment identity (IMEI, International Mobile Equipment Identity), and the like.

The multi-carrier communication method 100 according to this embodiment of the present invention is applicable to a scenario shown in FIG. 1a (Case 1), applicable to a scenario shown in FIG. 1b (Case 2), or applicable to a scenario shown in FIG. 1c (Case 3).

Case 1

As shown in FIG. 1a, for example, three cells M2, PI, P2 are deployed at a frequency F2 (an example of the second carrier), where M2 is a macro cell, and PI and P2 are micro cells whose coverage overlaps with coverage of M2. In addition, for example, one macro cell M1 is deployed at a frequency F1. It should be understood that the above scenario is provided in an illustrative sense, and not in a restrictive sense. For example, only one micro cell, either PI or P2, may be configured in M2, or multiple micro cells may be configured in M2. Alternatively, a micro cell may be configured in M1 and no micro cell may be configured in M2, which is not limited in the present invention.

In this embodiment of the present invention, M1 and M2, whose antennas are at a same geographic location and whose coverage areas are the same, may form a DC carrier group. A DC terminal may use F1 as a primary carrier and F2 as a secondary carrier and establish downlink connections in M1 and M2. The process of the dual-carrier communication and an implementation method of the process may be the same as in the prior art. To avoid repeated description, descriptions of the process and the implementation method of the process are omitted herein.

In addition, in this embodiment of the present invention, the network side device may pre-configure cells whose antennas are at different sites as a DC carrier resource group. For example, an RNC (an example of the network side device) may pre-configure P1 and M1 whose antennas are at different sites (in different geographic locations) and whose coverage areas are different as a DC carrier group (a DC carrier resource group) of the UE. Likewise, P2 and M1 may also be configured as a DC carrier group to serve the UE.

In this embodiment of the present invention, the following cases arise. In Case a, the UE may enter PI or P2 when downlink connections have been established in M1 and M2, thereby triggering the network side device to implement the multi-carrier communication method 100 in this embodiment of the present invention; in Case b, the UE may enter, when no downlink connection has been established, a DC carrier group formed by M1 and M2, a DC carrier group formed by M1 and PI, or a DC carrier group formed by M1 and P2, thereby triggering the network side device to implement the multi-carrier communication method 100 in this embodiment of the present invention.

Case a

Optionally, in this embodiment of the present invention, before the network side device instructs the UE to communicate with the first cell of the first carrier via the first carrier while communicating with the third cell via the second carrier, the method further includes:

the network side device determines that the UE is in a state that the UE communicates with a second cell of the second carrier via the second carrier while communicating with the first cell via the first carrier; and
the step in which the network side device instructs the UE to communicate with the first cell of the first carrier via the first carrier while communicating with the third cell via the second carrier specifically includes:
the network side device instructs the UE to hand over from the second cell to the third cell on the second carrier, so that the UE communicates with the first cell via the first carrier while communicating with the third cell via the second carrier.

In this embodiment of the present invention, the following cases are separately described. In Case a-1, the first carrier may be a primary carrier of the UE and the second carrier may be a secondary carrier of the UE. In Case a-2, the first carrier may be a secondary carrier of the UE and the second carrier may be a primary carrier of the UE. The cases are not intended to limit the present invention.

Case a-1

Optionally, the first carrier is a primary carrier of the UE and the second carrier is a secondary carrier of the UE.
Specifically, for example, as shown in FIG. 1a, the UE (a DC terminal) may use F1 (an example of the first carrier) as a primary carrier and F2 (an example of the second carrier) as a secondary carrier, and establish downlink connections in M1 (an example of the first cell) and M2 (an example of the second cell). Herein, a method and a process for establishing downlink connections in M1 and M2 by the UE may be the same as in the prior art, and descriptions thereof are omitted herein.
If the DC terminal enters, for example, PI, because the DC terminal still uses the M2 cell as a secondary-carrier cell and interference from PI is relatively strong, the DC terminal has poor signal quality in the M2 cell, thereby making it impossible to accomplish a relatively high throughput rate and adversely affecting subscriber experience.
Correspondingly, in S110 in this embodiment of the present invention, the RNC may acquire signal quality of all cells (including M2, PI, and P2) of F2 measured by the UE from the UE.
In this embodiment of the present invention, the RNC may instruct the UE to measure and report the signal quality of all cells of F2, or the UE may proactively measure and report the signal quality of all cells of F2, which is not limited in the present invention.
Optionally, in this embodiment of the present invention, the step in which the network side device acquires signal quality of the at least one cell of the second carrier measured by the user equipment UE includes:

the network side device instructs the UE to measure the signal quality of the at least one cell of the second carrier; and
the network side device acquires the signal quality of the at least one cell of the second carrier measured, according to the instruction of the network side device, by the UE.

Specifically, an inter-frequency measurement approach in use varies depending on UE capabilities. If the UE has a relatively high capability, for example, the UE has a capability of skipping a compression mode, namely, the UE is able to perform an operation, such as measuring signal quality of another frequency, while the UE is using a frequency to perform communication, or if the UE supports dual cell high speed uplink packet access (DC-HSUPA, Dual Cell High Speed Uplink Packet Access), namely, the UE has two or more than two links in an active set of a carrier of F2, the UE can measure signal quality of a carrier of another frequency without affecting current communication. On the contrary, if the UE has a relatively low capability, typically, the UE does not proactively measure signal quality of a carrier of another frequency (a secondary carrier, which is the second carrier in this embodiment of the present invention).

Therefore, in this embodiment of the present invention, the RNC (an example of the network side device) may instruct the UE to measure and report the signal quality of all cells of F2.

Optionally, in this embodiment of the present invention, the step in which the network side device instructs the UE to measure the signal quality of the at least one cell of the second carrier includes:

the network side device determines that a channel quality indicator CQI value of the UE in the second cell meets a first preset condition; and
the network side device instructs the UE to measure the signal quality of the at least one cell of the second carrier.

Specifically, for example, the RNC may acquire, from a base station NodeB, a channel quality indicator (CQI, Channel Quality Indicator) value of the UE at F2, where the NodeB is controlled by the RNC and is able to communicate with the UE. Herein, because the UE has established a downlink connection in M2 (an example of the second cell), the CQI value of the UE at F2 is specifically a CQI value of the UE in M2. The RNC determines whether the CQI value of the UE in M2 meets a preset condition (the first preset condition) and instructs, in a case in which the preset condition is met, the UE to measure and report the signal quality of all cells that operate at F2.

Optionally, the step in which the network side device determines that a CQI value of the UE in the second cell meets the first preset condition specifically includes:

the network side device acquires the CQI value of the UE in the second cell; and
determines that the CQI value of the UE in the second cell is less than a first preset threshold.

Specifically, according to the first preset condition, if the CQI value of the UE in M2 is less than a preset threshold (the first preset threshold, for example, 15), it can be determined that signal quality of the UE in M2 is relatively poor. If the UE continues to use M2 as a secondary carrier, signal quality of the secondary carrier may be affected, thereby affecting subscriber experience of the UE. In this case, the RNC may instruct the UE to report the signal quality of all cells of F2.

Optionally, in this embodiment of the present invention, the step in which the network side device instructs the UE to measure the signal quality of the at least one cell of the second carrier includes:

the network side device determines that a relationship between a CQI value of the UE in the first cell and a CQI value of the UE in the second cell meets a second preset condition; and

the network side device instructs the UE to measure the signal quality of the at least one cell of the second carrier.

Specifically, for example, the RNC may acquire, from a base station NodeB, a channel quality indicator (CQI, Channel Quality Indicator) value of the UE at F2, where the NodeB is controlled by the RNC and is able to communicate with the UE. Herein, because the UE has established a downlink connection in the M2 cell, the CQI value of the UE at F2 is specifically a CQI value of the UE in M2. In addition, the RNC may acquire, from the base station NodeB that is controlled by the RNC and is able to communicate with the UE, a CQI value of the UE at F1, determine whether the CQI value of the UE in M2 and the CQI value of the UE at F1 meet a preset condition (the second preset condition), and instruct, in a case in which the preset condition is met, the UE to measure and report the signal quality of all cells that operate at F2.

Optionally, the step in which the network side device determines that a relationship between the CQI value of the UE in the first cell and the CQI value of the UE in the second cell meets the second preset condition specifically includes:

the network side device acquires the CQI value of the UE in the first cell and the CQI value of the UE in the second cell; and
the network side device determines that the CQI value of the UE in the second cell is less than a second preset threshold, and determines that a difference obtained by subtracting the CQI value of the UE in the second cell from the CQI value of the UE in the first cell is greater than a third preset threshold.

Specifically, according to the second preset condition, if a CQI value of the UE in M2 is less than a preset threshold (the second preset threshold, for example, 20) and a difference obtained by subtracting the CQI value of the UE in M2 from a CQI value of the UE in M1 is greater than a preset threshold (the third preset threshold, for example, 5), it can be determined that signal quality of the UE in M2 is relatively poor. If the UE continues to use M2 as a secondary carrier, subscriber experience of the UE may be affected. In this case, the RNC may instruct the UE to measure and report the signal quality of all cells of F2.

In addition, in this embodiment of the present invention, after the RNC instructs the UE to measure and report the signal quality of all cells of F2, the RNC may instruct the UE to stop measuring and reporting the signal quality of all cells of F2. For example, if the CQI value of the UE in M2 is greater than a preset threshold (for example, 22), it can be determined that signal quality of the UE in M2 is relatively good. Continuing to use M2 as a secondary carrier may not affect subscriber experience of the UE. In this case, the RNC may instruct the UE to stop measuring and reporting the signal quality of all cells of F2.

For another example, if a CQI value of the UE in M2 is greater than a preset threshold (for example, 17) and a difference obtained by subtracting the CQI value of the UE in M2 from a CQI value of the UE in M1 is less than a preset threshold (for example, 2), it can be determined that signal quality of the UE in M2 is relatively good. Continuing to use M2 as a secondary carrier may not affect subscriber experience of the UE. In this case, the RNC may instruct the UE to stop measuring and reporting the signal quality of all cells of F2.

In addition, optionally, in this embodiment of the present invention, the CQI value is a sampling value or a filtering value within a first preset time.

Specifically, in this embodiment of the present invention, the CQI value may be channel quality, recorded by the NodeB, of the UE at F2 or F1 within a preset time period (the first preset time). It should be noted that, the first preset time may be any time and is not limited in the present invention.

Alternatively, filtering may also be performed on the CQI of the UE at F2 or F1 recorded by the NodeB. For example, the alpha (alpha) filtering method may be used as a filtering method, and practiced in accordance with the prior art, for example, according to the following Formula 1.

$$F(n) = (1\text{-alpha})*F(n\text{-}1) + \text{alpha} * M(n) \qquad \text{Formula 1}$$

F(n) represents a filtering value at a moment n, alpha represents a filter coefficient, and M(n) represents a measurement value at the moment n.

It should be noted that, the foregoing implementations of how the RNC determines, according to the CQI value and the preset condition, whether it is necessary to instruct the UE to measure and report the signal quality of all cells of F2 (or instruct the UE to stop measuring and reporting the signal quality of all cells of F2) are merely provided in an illustrative sense. However, the present invention is not limited thereto. The NodeB may perform the determining procedure and notify, according to a result of the determining, the RNC to instruct the UE to measure and report the signal quality of all cells of F2 (or instruct the UE to stop measuring and reporting the signal quality of all cells of F2).

Optionally, in this embodiment of the present invention, the step in which the network side device instructs the user equipment UE to measure the signal quality of the at least one cell of the second carrier specifically includes:
the network side device instructs the UE to periodically measure signal quality of at least two cells of the second carrier.

Specifically, after determining that it is necessary to instruct the UE to measure and report signal quality of all cells of F2, the RNC may instruct the UE to periodically measure and report the signal quality of all cells of F2, so that a handover can be handled more quickly and the multi-carrier communication method in this embodiment of the present invention can be more effectively practiced.

Optionally, in this embodiment of the present invention, the step in which the network side device instructs the user equipment UE to measure the signal quality of the at least one cell of the second carrier specifically includes:
the network side device periodically instructs the UE to measure signal quality of at least two cells of the second carrier.

Specifically, the RNC may instruct (by delivering signaling such as an instruction message) the UE to measure and report signal quality of all secondary-carrier cells (M2, PI, and P2) configured for M1 at the F2 frequency, and then may start a measurement timer. In addition, the RNC determines, according to a measurement result reported by the UE, whether a preset condition is met. If the preset condition is met, the RNC instructs the UE to re-configure the currently used secondary-carrier cell as a third cell (a cell of the best signal quality on a carrier of F2). If the preset condition is not met, when the timer expires, the RNC again instructs, by delivering signaling such as an instruction message, the UE to measure and report signal quality of all secondary-carrier cells (M2, PI, and P2) configured for M1 at the F2 frequency.

In addition, optionally, in this embodiment of the present invention, the step in which the network side device instructs the user equipment UE to measure the signal quality of the at least one cell of the second carrier further includes:

the network side device determines a location of the UE within a second preset time;
determines that the UE is in a moving state according to the location within the second preset time; and
the network side device instructs the user equipment UE to measure the signal quality of the at least one cell of the second carrier.

Specifically, the RNC determines the location of the UE and determines whether the UE is moving. If the UE is in a motionless state within a time interval of the timer, when the timer expires, the RNC may simply restart the timer and does not need to deliver an instruction for inter-frequency measurement. In this embodiment of the present invention, the RNC may use a prior-art method and process to determine the location of the UE. To avoid repeated description, descriptions of the method and the process are omitted herein.

Typically, signal quality of the UE in a same location remains unchanged (at different points of time, path losses of a signal in a spatial range are the same). Therefore, when the UE is not moving, it can be considered that signal quality of all secondary-carrier cells (M2, PI, and P2) configured for M1 at the F2 frequency does not change.

In this way, a quantity of measurements taken by the UE can be reduced, which in turn alleviates performance degradation of the UE due to the measurements and conserves communication resources.

According to the multi-carrier communication method in this embodiment of the present invention, only if it is determined that channel quality of a UE in a secondary-carrier cell meets a preset condition, the UE is instructed to measure and report signal quality of all secondary-carrier cells. In this way, a burden of the UE can be reduced, communication resources can be saved, and subscriber experience of the UE can be improved.

The foregoing implementations of how the RNC or the NodeB determines, according to channel quality of the UE in a secondary-carrier (F2) cell (M2), whether it is necessary to instruct the UE to measure and report the signal quality of all cells of F2 are merely provided in an illustrative sense. However, the present invention is not limited thereto. For example, in this embodiment of the present invention, the RNC may also periodically instruct the UE to measure and report the signal quality of all cells of F2.

In addition, for example, the time when the network side device may instruct the UE to perform inter-frequency measurement varies depending on capabilities of the UE. If a UE has a relatively high capability, for example, the UE has a capability of skipping a compression mode (compression mode) during inter-frequency measurement, the UE can measure signal quality of another carrier without affecting current communication on a current carrier, where the current carrier and the another carrier are at different frequencies and comprise a DC carrier group. Therefore, in this embodiment of the present invention, if the UE has a relatively high capability, the RNC may instruct the UE to periodically measure signal quality of all cells on a carrier of another frequency (a secondary carrier, which is the second carrier in this embodiment of the present invention) that forms a DC carrier group together with a primary carrier (the first carrier) on which the UE is currently located. It can be understood that when the UE does not have the capability of skipping a compression mode during inter-frequency measurement, the RNC may instruct the UE to periodically measure, by using a compression mode, the signal quality of all cells on a carrier of another frequency that forms a DC carrier group together with the primary carrier.

For another example, if the UE supports DC-HSUPA and DC-HSUPA is applied in the uplink, when the UE has two or more than two links in an active set of the secondary carrier (the second carrier), the RNC may instruct the UE to periodically measure and report signal quality of all cells on the secondary carrier. However, when the UE has only one link in the active set of the secondary carrier, the RNC may instruct the UE to stop measuring and reporting signal quality of all cells on the secondary carrier.

After the RNC acquires, from the UE, the signal quality of all secondary-carrier cells (M2, PI, and P2) configured for M1 at the F2 frequency, in S120, the RNC may select a cell with the best signal quality from M2, PI, and P2. For example, when the UE is located in PI, PI has the best signal quality among all cells of F2, because P1 and M2 are same-frequency micro cells and thereby signal strength of PI is greater than signal strength of M2 and P2. Therefore, among signal quality of all cells that is reported by the UE, signal quality of PI is the best. At this time, the RNC can determine that PI is the cell whose signal quality is the best among cells that use F2.

Accordingly, in S130, the RNC may instruct the UE to use a DC carrier group formed by P1 and M1 to perform communication. Specifically, the UE may perform communication by using F2 from PI as a secondary carrier and using F1 from M1 as a primary carrier. The method and the procedure for the communication may be the same as in the prior art. To avoid repeated description, descriptions of the method and the procedure are omitted herein. Descriptions of a same or similar case are omitted below.

Optionally, in this embodiment of the present invention, the step in which the network side device instructs the UE to hand over from the second cell to the third cell on the second carrier includes:

the network side device determines signal quality of the third cell and signal quality of the second cell;
the network side device determines that a relationship between the signal quality of the third cell and the signal quality of the second cell meets a third preset condition; and
instructs the UE to hand over from the second cell to the third cell on the second carrier.

Specifically, in this embodiment of the present invention, for example, if the UE is located in a border area between PI and M2, even if signal quality of PI measured by the UE is better than signal quality of the M2 cell measured by the UE, a CQI of the secondary carrier is still very poor due to strong interference and a relatively high throughput rate cannot be accomplished. Therefore, in this embodiment of the present invention, a determination is made as to whether a relationship between PI (the third cell) whose signal quality is the best and a current secondary-carrier cell M2 (the second cell) of the UE meets a preset condition (the third preset condition), and in a case in which the preset condition is met, the UE may be instructed to hand over from M2 to P1. In this embodiment of the present invention, a method and a process for handing over from M2 to PI by the UE may be the same as in the prior art. To avoid repeated description, descriptions of the method and the process are omitted herein.

Optionally, the step in which the network side device determines signal quality of the third cell and signal quality of the second cell includes:

the network side device determines the signal quality of the third cell according to a common pilot channel received signal code power CPICH_RSCP value of the third cell; and
the network side device determines the signal quality of the second cell according to a CPICH_RSCP value of the second cell; and
the step in which the network side device determines that a relationship between the signal quality of the third cell and the signal quality of the second cell meets the third preset condition specifically includes:
the network side device determines that a difference obtained by subtracting the CPICH_RSCP value of the second cell from the CPICH_RSCP value of the third cell is greater than a fourth preset threshold.

Specifically, by way of example, a common pilot channel received signal code power (CPICH_RSCP, Common Pilot Channel_ Received Signal Code Power) may be used to represent signal quality. The RNC may determine whether a difference obtained by subtracting a CPICH_RSCP value of M2 (the second cell) from a CPICH_RSCP value of PI (the third cell) is greater than a preset threshold (the fourth preset threshold, for example, 3 dB). If the difference is greater than the preset threshold, the UE may be instructed to hand over from M2 to P1.

Optionally, the step in which the network side device determines signal quality of the third cell and signal quality of the second cell includes:

the network side device determines the signal quality of the third cell according to a CPICH energy per chip/interference power density Ec/I0 value (may also be referred to as an Ec/Io value) of the third cell; and
the network side device determines the signal quality of the second cell according to a CPICH Ec/I0 value of the second cell; and
the step in which the network side device determines that a relationship between the signal quality of the third cell and the signal quality of the second cell meets the third preset condition specifically includes:
the network side device determines that a difference obtained by subtracting the CPICH Ec/I0 value of the second cell from the CPICH Ec/I0 value of the third cell is greater than a fifth preset threshold.

Specifically, by way of example, a signal-to-noise ratio of a common pilot channel, for example, the energy per chip/interference power density (CPICH Ec/I0, Common Pilot Channel_ Ec/I0) may be used to represent signal quality. The RNC may determine whether a difference obtained by subtracting a CPICH Ec/I0 value of M2 (the second cell) from a CPICH Ec/I0 value of PI (the third cell) is greater than a preset threshold (the fourth preset threshold, for example, 3 dB). If the difference is greater than the preset threshold, the UE may be instructed to hand over from M2 to PI.

It should be understood that the Ec/I0 is merely an example of the signal-to-noise ratio, but the present invention is not limited thereto. For example, the signal-to-noise ratio may also be energy per bit/noise power density (Eb/No).

Optionally, the step in which the network side device determines signal quality of the third cell and signal quality of the second cell includes:

the network side device determines the signal quality of the third cell according to a first difference obtained by subtracting a CPICH path loss value from a CPICH transmit power value of the third cell; and
the network side device determines the signal quality of the second cell according to a second difference obtained by subtracting a CPICH path loss value from a CPICH transmit power value of the second cell; and
the step in which the network side device determines that a relationship between the signal quality of the third cell and the signal quality of the second cell meets the third preset condition specifically includes:
the network side device determines that a difference obtained by subtracting the second difference from the first difference is greater than a sixth preset threshold.

Specifically, by way of example, a difference obtained by subtracting a CPICH path loss value from a CPICH transmit power value may be used to represent signal quality. The RNC may determine a difference (the first difference) obtained by subtracting a CPICH path loss value from a CPICH transmit power value of PI (the third cell), and determine a difference (the second difference) obtained by subtracting a CPICH path loss value from a CPICH transmit power value of M2 (the second cell), and then may determine whether a difference obtained by subtracting the second difference from the first difference is greater than a preset threshold (the fourth preset threshold, for example, 3 dB). If the difference obtained by subtracting the second difference from the first difference is greater than the preset threshold, the UE may be instructed to hand over from M2 to P1.

It should be understood that specific values of the preset thresholds are provided in an illustrative sense, and not in a restrictive sense. Any values may be used as the preset thresholds.

According to the multi-carrier communication method in this embodiment of the present invention, a determination of whether to instruct the UE to perform handover is performed according to a relationship between a cell whose signal quality is the best among all cells of the second carrier and a secondary-carrier cell selected currently by the UE. This helps improve subscriber experience and reduce a burden of the UE.

Case a-2

Optionally, in this embodiment of the present invention, the second carrier is a primary carrier of the UE, and the first carrier is a secondary carrier of the UE; and

the step in which the network side device acquires signal quality of the at least one cell of the second carrier measured by the user equipment UE specifically includes:

the network side device acquires the signal quality of the at least one cell of the second carrier measured, by performing intra-frequency measurement, by the UE.

Specifically, for example, as shown in FIG. 1a, the UE (a DC terminal) may use F1 (an example of the first carrier) as a secondary carrier and F2 (an example of the second carrier) as a primary carrier, and establish downlink connections in M1 (an example of the first cell) and M2 (an example of the second cell). Herein, a method and a process for establishing downlink connections in M1 and M2 by the UE may be the same as in the prior art, and descriptions of the method and the process are omitted herein.

In the prior art, after the DC terminal enters, for example, PI, the cells P1 and M1 cannot form a DC carrier group, because they have different coverage areas and their antennas are at different sites. Consequently, after entering PI, the UE fails to use a dual-carrier service, and subscriber experience is affected.

On the contrary, in this embodiment of the present invention, P1 and M1 are used as a DC carrier group. Therefore, even if the UE enters PI, and the UE can still follow an instruction of the RNC to establish the downlink connections in the DC carrier group formed by PI and M1, thereby improving subscriber experience.

In this case, in S110, because the UE uses F2 as a primary carrier, the UE may perform intra-frequency measurement on all cells that operate at F2, and may report, according to an instruction of the RNC or proactively, a measurement result to the RNC.

In S120, the RNC may determine, according to the measurement result reported by the UE, that the best cell at F2 is PI (an example of the third cell).

In S130, the RNC may instruct the UE to use F2 as a primary carrier and F1 as a secondary carrier and to establish downlink connections in the DC carrier group formed by PI and M1.

The foregoing has illustrated a procedure in which when the UE enters a PI or P2 area after it establishes a downlink connection in M1 and M2, the network side device is triggered to implement the multi-carrier communication method 100 in this embodiment of the present invention. However, the foregoing procedure is also applicable to a case in which the UE moves from PI to M2, the UE moves from P2 to M2, or the UE moves from M2 to P2. To avoid repeated description, descriptions of the procedure are omitted herein.

Case b

The UE may also enter an overlapping coverage area between M1 and M2 in a case in which no communication connection has been established. In this case, the UE can perform communication by using a DC carrier group formed by M1 and M2, a DC carrier group formed by M1 and PI, or a DC carrier group formed by M1 and P2. In this case the RNC (the network side device) is triggered to perform the multi-carrier communication method 100 in this embodiment of the present invention.

Optionally, the method further includes:

the network side device receives an access request message sent on the first carrier by the UE for requesting access to the first cell, and determines, according to the access request message, that the UE communicates with the first cell via the first carrier; and

the step in which the network side device acquires signal quality of the at least one cell of the second carrier measured by the user equipment UE includes:

the network side device acquires, from the access request message, the signal quality of the at least one cell of the second carrier measured by the UE.

Specifically, in this case, when the UE is in an access state, the UE may measure signal quality of all cells of all carriers, so that the signal quality of all cells of all carriers measured by the UE can be carried in the access request message sent to the RNC (or the NodeB), and therefore, in S110, the RNC can determine the signal quality of all cells from the access request message.

In S120, the RNC may determine the best cell at F2 according to a measurement result reported by the UE. For example, when the UE is located in PI, signal strength is the strongest and signal quality is the best in P1. Therefore, PI is a cell (the third cell) with the best signal quality at F2.

In S130, the RNC may instruct the UE to establish downlink connections in a DC carrier group formed by PI and M1. The UE may use F2 as a primary carrier and F1 as a secondary carrier, and establish downlink connections in the DC carrier group formed by PI and M1. Alternatively, the UE may use F2 as a secondary carrier and F1 as a primary carrier, and establish downlink connections in the DC carrier group formed by PI and M1, which is not limited in the present invention.

It should be noted that, by way of example, the foregoing has described an embodiment in which the UE measures and reports, according to an instruction of the RNC or periodically, signal quality of all cells of F2 (a carrier on which multiple cells exist). However, the present invention is not limited thereto. For example, if the RNC can learn about coverage areas (or a geographic location and radiant power of an antenna) of all cells at F2 and a location of the UE, a cell (the third cell) with the best signal quality at F2 can be determined according to the location of the UE and the coverage areas of the cells, provided that only an impact of path loss on signal quality is taken into consideration (an impact of an obstacle, such as a building, on signal quality is ignored). Descriptions of a same or similar case are omitted below.

Case 2

As shown in FIG. 1b, for example, two micro cells P1 and P2 are deployed at a frequency F2, and one macro cell M1 is deployed at a frequency F1. In this embodiment of the present invention, antennas of P1 and M1 are at different sites (in different geographic locations), and coverage areas of P1 and M1 are also different; therefore, the RNC (an example of the network side device) may pre-use P1 and M1 as a DC carrier group, or likewise may use the P2 cell and M1 as a DC carrier group.

Because two cells (P1 and P2) are deployed at F2, signal quality of the UE at F2 may change as the UE moves between P1 and P2 cells. Therefore, in S110, the RNC (an example of the network side device) may acquire signal quality of all cells (PI and P2) at F2 (an example of the second carrier) measured by the UE from the UE. The process and the method for acquiring, by the RNC, signal quality of all cells at F2 may be similar to the process and the method described in Case 1 for acquiring, by the RNC, signal quality of all cells at F2 measured by the UE. To avoid repeated description, descriptions of the process and the method are omitted herein.

For example, when the UE is located within a common coverage area between F2 and F1 (for example, when the UE is located in the PI cell) and signal quality of PI is the best among all cells of F2 measured by the UE, in S120, the RNC may determine PI as a cell (the third cell) whose signal quality is the beast among all cells of F2 measured by the UE, and accordingly, in S130, the RNC may instruct the UE to perform communication by using the DC carrier group formed by P1 and M1. The UE may use F2 as a primary carrier and F1 as a secondary carrier and establish downlink connections in the DC carrier group formed by PI and M1, or may use F2 as a secondary carrier and F1 as a primary carrier and establish downlink connections in the DC carrier group formed by PI and M1, which is not limited in the present invention.

Optionally, in this embodiment of the present invention, before the network side device instructs the UE to communicate with a first cell of the first carrier via the first carrier while communicating with the third cell via the second carrier, the method further includes:

the network side device determines that the UE is in a state that the UE communicates only with the first cell via the first carrier.

Specifically, in this embodiment of the present invention, because P1 and P2 are micro cells and their coverage areas are smaller than a coverage area of M1, there may be a case in which the UE is located outside the coverage areas of P1 and P2 but is located inside the coverage area of M1. In this case, the UE can perform communication only by using F1 from M1.

Optionally, the step in which the network side device acquires signal quality of the at least one cell of the second carrier measured by the user equipment UE includes:

the network side device instructs the UE to measure the signal quality of the at least one cell of the second carrier; and
the network side device acquires the signal quality of the at least one cell of the second carrier measured, according to the instruction of the network side device, by the UE.

Specifically, when the UE moves to a coverage area of PI or P2, it indicates that the UE may establish downlink connections by using the DC carrier group formed by P1 and M1 or the DC carrier group formed by P2 and M1. Therefore, when the UE performs communication only by using F1 from M1, the RNC may instruct (for example, by using an instruction message) the UE to measure signal quality of all cells (P1 and P2) at F2. Therefore, when the UE moves to the coverage area of PI or P2, signal quality of F2 reported by the UE is significantly improved, and the RNC may determine a cell (the third cell) whose signal quality is the best among all cells of F2 measured by the UE, and accordingly, in S130, the RNC may instruct the UE to perform communication by using the DC carrier group formed by the cell (PI or P2) with the best signal quality and M1. In addition, the UE may use F2 as a primary carrier and F1 as a secondary carrier and establish downlink connections in the DC carrier group formed by P1 and M1, or may use F2 as a secondary carrier and F1 as a primary carrier and establish downlink connections in the DC carrier group formed by P1 and M1, which is not limited in the present invention.

Optionally, the method further includes:

the network side device receives an access request message sent on the first carrier by the UE for requesting access to the first cell, and determines, according to the access request message, that the UE communicates with the first cell via the first carrier; and
the step in which the network side device acquires signal quality of the at least one cell of a second carrier measured by the user equipment UE includes:
the network side device acquires, from the access request message, the signal quality of the at least one cell of the second carrier measured by the UE.

Specifically, in this embodiment of the present invention, the UE may also enter, when no communication connection has been established, the DC carrier group formed by M1 and P1 or the DC carrier group formed by M1 and P2, thereby triggering the RNC (the network side device) to perform the multi-carrier communication method 100 in this embodiment of the present invention.

In this case, when the UE is in an access state, the UE may measure signal quality of all cells of all carriers, so that the signal quality of all cells of all carriers measured by the UE can be carried in the access request message sent to the RNC (or the NodeB), and therefore, in S110, the RNC can determine the signal quality of all cells from the access request message.

In S120, the RNC may determine the best cell at F2 according to a measurement result reported by the UE. For example, when the UE is located in PI, signal strength is the strongest and signal quality is the best in P1. Therefore, PI is a cell (the third cell) with the best signal quality at F2.

In S130, the RNC may instruct the UE to establish downlink connections in a DC carrier group formed by PI and M1. The UE may use F2 as a primary carrier and F1 as a secondary carrier and establish downlink connections in the DC carrier group formed by PI and M1, or may use F2 as a secondary carrier and F1 as a primary carrier and establish downlink connections in the DC carrier group formed by PI and M1, which is not limited in the present invention.

Optionally, the method further includes:

the network side device receives an access request message sent on the first carrier by the UE for requesting access to the first cell, and determines, according to the access request message, that the UE communicates with the first cell via the first carrier; and
the step in which the network side device acquires signal quality of the at least one cell of a second carrier measured by the user equipment UE includes:

the network side device instructs the UE to measure the signal quality of the at least one cell of the second carrier; and
the network side device acquires the signal quality of the at least one cell of the second carrier measured, according to the instruction of the network side device, by the UE.

Specifically, in this embodiment of the present invention, the UE may also enter M1 when no communication connection has been established. In this case, the UE can perform communication by using the DC carrier group formed by M1 and P1 or the DC carrier group formed by M1 and P2. In this case the RNC (the network side device) is triggered to perform the multi-carrier communication method 100 in this embodiment of the present invention.

In this case, the UE may be located inside the coverage area of PI or P2 or may be located outside the coverage area of PI or P2. Therefore, in S110, the RNC may instruct the UE to measure quality of all cells of F2.

In S120, the RNC may determine the best cell at F2 according to a measurement result reported by the UE.

For example, when the UE is located in PI, signal strength is the strongest and signal quality is the best in P1. Therefore, PI is a cell (the third cell) with the best signal quality at F2.

In S130, the RNC may instruct the UE to establish downlink connections in a DC carrier group formed by PI and M1. The UE may use F2 as a primary carrier and F1 as a secondary carrier and establish downlink connections in the DC carrier group formed by PI and M1, or may use F2 as a secondary carrier and F1 as a primary carrier and establish downlink connections in the DC carrier group formed by PI and M1, which is not limited in the present invention.

Case 3

As shown in FIG. 1c, beam directions of carriers F1 and F2 from a base station A are different (an antenna downtilt of F1 is different from an antenna downtilt of F2), and likewise, beam directions of carriers F1 and F2 from a base station B are different.

For example, in an area B, the antenna downtilt of F2 is smaller than the antenna downtilt of F1, and therefore in the direction of from F2 to the UE, a path loss is relatively small and strength is relatively strong; this means that signal quality of F2 is better than signal quality of F1, but a coverage area of F2 is smaller than a coverage area of F1, namely, Y2 is smaller than X2. Likewise, in an area C, the antenna downtilt of F1 is smaller than the antenna downtilt of F2, and therefore in the direction of from F1 to the UE, a path loss is relatively small and strength is relatively strong. This means that signal quality of F1 is better than signal quality of F2, but a coverage area of F1 is smaller than a coverage area of F2, namely, X1 is smaller than Y1.

In an area A, antennas of F1 and F2 are at different sites (in different geographic locations) and coverage areas of F1 and F2 are also different, F2 (an example of the second carrier) and F1 (an example of the first carrier) are different carriers (specifically, F1 and F2 are at different frequencies), and the RNC (an example of the network side device) may use X2 and Y1 as a DC carrier group in the area A.

In the area B, coverage areas of F1 and F2 are different, F2 (an example of the second carrier) and F1 (an example of the first carrier) are different carriers (specifically, F1 and F2 are at different frequencies), and the RNC (an example of the network side device) may use X2 and Y2 as a DC carrier group in the area B.

In the area C, coverage areas of F1 and F2 are different, F2 (an example of the second carrier) and F1 (an example of the first carrier) are different carriers (specifically, F1 and F2 are at different frequencies), and the RNC (an example of the network side device) may use X1 and Y1 as a DC carrier group in the area C.

When the UE has performed communication by using F1 and F2, for ease of understanding, the following is described by assuming that the UE has been located in the area B and the UE performs communication by using F1 as a primary carrier and F2 as a secondary carrier.

In the prior art, for example, when the UE moves from the area B to the area A, a signal of F2 from the base station B has relatively poor signal quality and even disappears, and the UE cannot continue to use F2 from the base station B to perform communication.

Correspondingly, in this embodiment of the present invention, in S110, the RNC may acquire signal quality of all cells of F2 (specifically, the cell Y1 on F2 from the base station A and the cell Y2 on F2 from the base station B) measured by the UE. The process and the method for acquiring, by the RNC, signal quality of all cells at F2 measured by the UE may be the same as the process and the method described in Case 1. To avoid repeated description, descriptions of the process and the method are omitted herein.

Because the area A is located outside Y2 and located inside Y1, signal quality of Y1 is the best among all cells of F2 measured by the UE. In S120, the RNC may determine that Y1 is the cell with the best signal quality at F2.

In S130, the RNC may instruct the UE to establish downlink connections in a carrier group formed by Y1 and X2. The UE may perform communication by using F1 as a primary carrier and F2 as a secondary carrier according to the instruction of the RNC. The process for the communication may be the same as in the prior art, and descriptions of the process are omitted herein.

It should be understood that by way of example, the foregoing has illustrated an embodiment in which the UE moves from the area B to the area A, but the foregoing procedure is also applicable to a case in which the UE moves from the area C to the area A, the UE moves from the area A to the area C, or the UE moves from the area A to the area B.

In addition, by way of example, the foregoing has illustrated an embodiment in which the UE uses F1 as a primary carrier and F2 as a secondary carrier, but the present invention is not limited thereto; the UE may also use F2 as a primary carrier and F1 as a secondary carrier.

According to the multi-carrier communication method in this embodiment of the present invention, a network side device determines a third cell whose signal quality is the best among at least one cell of a second carrier according to signal quality measured by a UE, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

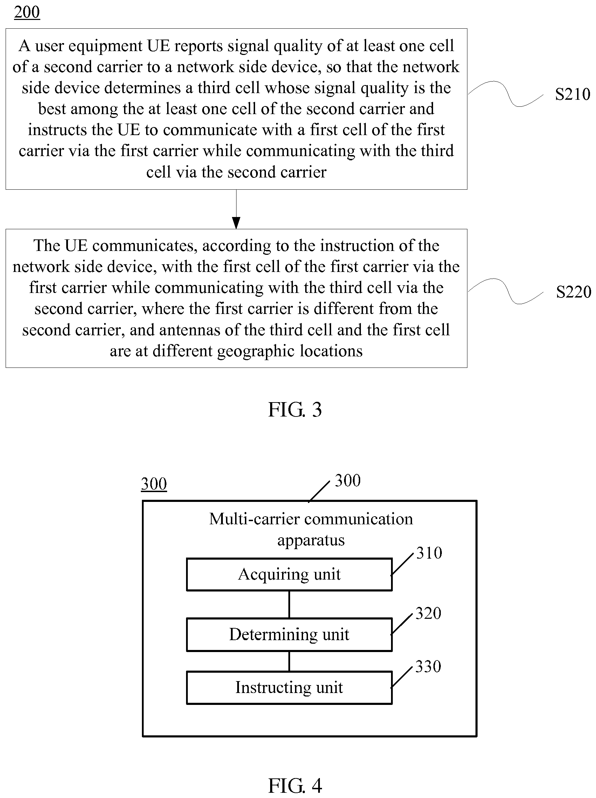

FIG. 3 shows a schematic flowchart of a multi-carrier communication method 200, described from a perspective of a user equipment UE, according to an embodiment of the present invention. As shown in FIG. 3, the method 200 includes:

S210. The user equipment UE reports signal quality of at least one cell of a second carrier to a network side device, so that the network side device determines a third cell whose signal quality is the best among the at least one cell of the second carrier and instructs the UE to communicate with a first cell of the first carrier via the first carrier while communicating with the third cell via the second carrier.

S220. According to the instruction of the network side device, the UE communicates with the first cell of the first carrier via the first carrier while communicating with the third cell via the second carrier, where the first carrier is different from the second carrier, and antennas of the third cell and the first cell are at different geographic locations.

In addition, in this embodiment of the present invention, the multi-carrier communication method 200 in this embodiment of the present invention may be applied when the UE is a DC terminal, that is to say, when the UE can simultaneously establish downlink connections only in two cells that have a same coverage area and operate on two carriers of different frequencies, where the two cells having the same coverage area are covered by two antennas at a same geographic location (two antennas at a same site).

Herein, it should be noted that "the UE can simultaneously establish downlink connections only in two cells that have a same coverage area and operate on two carriers of different frequencies" means that the UE cannot establish downlink connections in two cells that operate at different frequencies and are covered by antennas at different sites (two antennas at different geographic locations).

Therefore, in this embodiment of the present invention, the UE is a user equipment with a multi-carrier capability.

It should be noted that the UE with a multi-carrier capability may be, for example, a UE with a DC capability (a UE with a 2-carrier capability), a UE with a 3-carrier capability, a UE with a 4-carrier capability, a UE with a 6-carrier capability, or a UE with an 8-carrier capability. For diverse categories of terminals with a multi-carrier capability, refer to definitions in 3GPP R11 TS25.306, where category 21 to category 38 (category21-category38) are all HSDPA terminals with a multi-carrier capability. For ease of description, only a UE with a DC capability is used as an example for description in this embodiment of the present invention. An embodiment using a UE with another multi-carrier capability as an example is similar to this embodiment in which a UE with a DC capability is used as an example.

Specifically, for example, the UE may send, to an RNC (an example of the network side device), information indicating that the UE is a DC terminal, so that the RNC can determine that the UE is a DC terminal, and then can start a related procedure of the multi-carrier communication method 200 in this embodiment of the present invention. In addition, for example, the UE may add the information to one of the following messages and send (through a base station) the messages to the RNC: cell update (CELL UPDATE) message, initial direct transfer (INITIAL DIRECT TRANSFER) message, RRC connection setup request (RRC CONNECTION REQUEST) message, RRC connection setup complete (RRC CONNECTION SETUP COMPLETE) message, UE capability information (UE CAPABILITY INFORMATION), inter-system handover information (INTER RAT HANDOVER INFO), and the like.

It should be understood that the foregoing illustrated method whereby the network side device determines that the UE is a DC terminal is described by way of example only, and not by way of limitation. For example, the network side device may store a correspondence between whether the UE is a DC terminal and a subscriber identifier that uniquely identifies the UE, so that the network side device can determine, according to the subscriber identifier, whether the UE is a DC terminal. By way of example, the following may be used as the subscriber identifier: a mobile subscriber integrated service digital network number (MSISDN, Mobile Subscriber Integrated Services Digital Network), an international mobile subscriber identity (IMSI, International Mobile Station Equipment Identity), and an international mobile equipment identity (IMEI, International Mobile Subscriber Identity), and the like.

The multi-carrier communication method 200 according to this embodiment of the present invention is applicable to a scenario shown in FIG. 1a (Case 4), a scenario shown in FIG. 1b (Case 5), and a scenario shown in FIG. 1c (Case 6).

Case 4

As shown in FIG. 1a, for example, three cells M2, PI, P2 are deployed at a frequency F2 (an example of the second carrier), where M2 is a macro cell, and PI and P2 are micro cells whose coverage overlaps with coverage of M2; one macro cell M1 is deployed at a frequency F1. It should be understood that the above scenario is provided in an illustrative sense, and not in a restrictive sense. For example, in M2, only one micro cell, either PI or P2, may be configured, or multiple micro cells may be configured. Alternatively, a micro cell may be configured in M1 and no micro cell may be configured in M2, which is not limited in the present invention.

In this embodiment of the present invention, M1 and M2, whose antennas are at a same geographic location and whose coverage areas are the same, may form a DC carrier group. Therefore, for example, a DC terminal may use F1 as a primary carrier and F2 as a secondary carrier and establish downlink connections in M1 and M2. The process for the DC communication and an implementation method of the process may be the same as in the prior art. To avoid repeated description, descriptions of the process and the implementation method of the process are omitted herein.

In addition, in this embodiment of the present invention, the network side device may pre-configure cells whose antennas are at different sites as a DC carrier resource group. For example, the RNC (an example of the network side device) may pre-configure P1 and M1 as a DC carrier group (DC carrier resource group) of the UE, where antennas of P1 and M2 are at different sites (in different geographic locations) and coverage areas of P1 and M2 are different. Likewise, the P2 cell and M1 may also be configured as a DC carrier group to serve the UE.

In this embodiment of the present invention, the UE may enter a PI or P2 area when downlink connections have been established in M1 and M2 (Case c), or the UE may enter a DC carrier group formed by M1 and M2, a DC carrier group formed by M1 and PI, or a DC carrier group formed by M1 and P2 when no communication connection has been established (Case d).

Case c

Optionally, in this embodiment of the present invention, before the UE communicates, according to an instruction of the network side device, with the first cell of the first carrier via the first carrier while communicating with the third cell via the second carrier, the UE is in a state that the UE communicates with a second cell of the second carrier via the second carrier while communicating with the first cell via the first carrier; and

the step in which the UE communicates, according to an instruction of the network side device, with the first cell of the first carrier via the first carrier while communicating with the third cell via the second carrier specifically includes:

the UE hands over from the second cell to the third cell on the second carrier according to the instruction of the network side device, so as to communicate with the first cell via the first carrier while communicating with the third cell via the second carrier.

In addition, in this embodiment of the present invention, the first carrier may be a primary carrier of the UE and the second carrier may be a secondary carrier of the UE (Case c-1), or the first carrier may be a secondary carrier of the UE and the second carrier may be a primary carrier of the UE (Case c-2), which is not limited in the present invention and is described separately below.

Case c-1

Optionally, the first carrier is a primary carrier of the UE and the second carrier is a secondary carrier of the UE.

Specifically, for example, as shown in FIG. 1a, the UE (a DC terminal) may use F1 (an example of the first carrier) as a primary carrier and F2 (an example of the second carrier) as a secondary carrier and establish downlink connections in M1 (an example of the first cell) and M2 (an example of the second cell). Herein, a method and a process for establishing downlink connections in M1 and M2 by the UE may be the same as in the prior art, and descriptions of the method and the process are omitted herein.

If the DC terminal enters, for example, PI, because the DC terminal still uses the M2 cell as a secondary-carrier cell and interference from PI is relatively strong, the DC terminal has poor signal quality in the M2 cell, thereby making it impossible to accomplish a relatively high throughput rate and adversely affecting subscriber experience.

Correspondingly, in this embodiment of the present invention, the RNC may acquire, from the UE, signal quality of all cells (including M2, PI, and P2) of F2 measured by the UE.

In this embodiment of the present invention, the RNC may instruct the UE to measure and report the signal quality of all cells of F2, or the UE may proactively measure and report the signal quality of all cells of F2, which is not limited in the present invention.

Optionally, the step in which the user equipment UE reports signal quality of at least one cell of a second carrier to a network side device includes:

the UE receives an instruction of the network side device;
the UE measures the signal quality of the at least one cell of the second carrier according to the instruction of the network side device; and
the UE reports the measured signal quality of the at least one cell of the second carrier to the network side device.

Specifically, an inter-frequency measurement approach in use varies depending on UE capabilities. If the UE has a relatively high capability, for example, the UE has a capability of skipping a compression mode, namely, the UE can perform an operation, such as measuring signal quality of another frequency, while the UE is using a frequency to perform communication, or if the UE supports DC-HSUPA, namely, the UE has two or more than two links in an active set of a carrier of F2, the UE can measure signal quality of a carrier of another frequency without affecting current communication. On the contrary, if the UE has a relatively low capability, typically, the UE does not proactively measure signal quality of a carrier of another frequency (a secondary carrier, which is the second carrier in this embodiment of the present invention).

Therefore, in this embodiment of the present invention, the RNC (an example of the network side device) may instruct the UE to measure and report the signal quality of all cells of F2.

Optionally, in this embodiment of the present invention, for example, the RNC may acquire a channel quality indicator (CQI, Channel Quality Indicator) value of the UE at F2 from a base station NodeB, where the NodeB is controlled by the RNC and is able to communicate with the UE. Hereby, because the UE has established a downlink connection in the M2 cell (an example of the second cell), the CQI value of the UE at F2 is specifically a CQI value of the UE in M2. The RNC determines whether the CQI value of the UE in M2 meets a preset condition (the first preset condition) and instructs, in a case in which the preset condition is met, the UE to measure and report the signal quality of all cells that operate at F2.

In addition, according to the first preset condition, if the CQI value of the UE in M2 is less than a preset threshold (the first preset threshold, for example, 15), it can be determined that signal quality of the UE in M2 is relatively poor. If the UE continues to use M2 as a secondary carrier, signal quality of the secondary carrier may be affected, thereby affecting subscriber experience of the UE. In this case, the RNC may instruct the UE to measure and report the signal quality of all cells of F2.

For example, the RNC may acquire a channel quality indicator (CQI, Channel Quality Indicator) value of the UE at F2 from a base station NodeB, where the NodeB is controlled by the RNC and can communicate with the UE. Herein, because the UE has established a downlink connection in the M2 cell, the CQI value of the UE at F2 is specifically a CQI value of the UE in M2. In addition, the RNC may acquire a CQI value of the UE at F1 from the base station NodeB, where the NodeB is controlled by the RNC and can communicate with the UE, determine whether the CQI value of the UE in M2 and the CQI value of the UE at F1 meet a preset condition (the second preset condition), and instruct, in a case in which the preset condition is met, the UE to measure and report the signal quality of all cells that operate at F2.

According to the second preset condition, if a CQI value of the UE in M2 is less than a preset threshold (the second preset threshold, for example, 20) and a difference obtained by subtracting the CQI value of the UE in M2 from a CQI value of the UE in M1 is greater than a preset threshold (the third preset threshold, for example, 5), it can be determined that signal quality of the UE in M2 is relatively poor. If the UE continues to use M2 as a secondary carrier, subscriber experience of the UE may be affected. In this case, the RNC may instruct the UE to measure and report the signal quality of all cells of F2.

In addition, in this embodiment of the present invention, after the RNC instructs the UE to measure and report the signal quality of all cells of F2, the RNC may instruct the UE to stop measuring and reporting the signal quality of all cells of F2. For example, if the CQI value of the UE in M2 is greater than a preset threshold (for example, 22), it can be determined that signal quality of the UE in M2 is relatively good. Continuing to use M2 as a secondary carrier may not affect subscriber experience of the UE. In this case, the RNC may instruct the UE to stop measuring and reporting the signal quality of all cells of F2.

For another example, if a CQI value of the UE in M2 is greater than a preset threshold (for example, 17) and a difference obtained by subtracting the CQI value of the UE in M2 from a CQI value of the UE in M1 is less than a preset threshold (for example, 2), it can be determined that signal quality of the UE in M2 is relatively good. Continuing to use M2 as a secondary carrier may not affect subscriber experience of the UE. In this case, the RNC may instruct the UE to stop measuring and reporting the signal quality of all cells of F2.

In addition, optionally, in this embodiment of the present invention, the CQI value may be channel quality, recorded by the NodeB, of the UE at F2 or F1 within a preset time period (the first preset time). It should be noted that, herein, the first preset time may be any time and is not limited in the present invention.

Alternatively, filtering may also be performed on the CQI of the UE at F2 recorded by the NodeB. The alpha filtering method may be used as an example of filtering method, and practiced in accordance with the prior art, for example, according to the foregoing Formula 1.

It should be noted that by way of example, the foregoing has illustrated an embodiment in which the RNC determines, according to the CQI value and the preset condition, whether it is necessary to instruct the UE to measure and report the signal quality of all cells of F2 (or instruct the UE to stop measuring and reporting the signal quality of all cells of F2). However, the present invention is not limited thereto. The NodeB may perform the determining procedure and notify, according to a result of the determining, the RNC to instruct the UE to measure and report the signal quality of all cells of F2 (or instruct the UE to stop measuring and reporting the signal quality of all cells of F2).

Optionally, in this embodiment of the present invention, after determining that it is necessary to instruct the UE to measure and report signal quality of all cells of F2, the RNC may instruct the UE to periodically measure and report the signal quality of all cells of F2, so that a handover can be handled more quickly, and the multi-carrier communication method in this embodiment of the present invention can be more effectively practiced.

Optionally, in this embodiment of the present invention, the RNC may instruct (by delivering signaling such as an instruction message) the UE to measure and report signal quality of all secondary-carrier cells (M2, PI, and P2) configured for M1 at an F2 frequency, and then may start one measurement timer. In addition, the RNC determines, according to a measurement result reported by the UE, whether a preset condition is met. If a measurement result of a secondary-carrier cell meets the preset condition, the RNC instructs the UE to re-configure the secondary-carrier cell as a cell (the third cell) with the best signal quality on a carrier of F2. If no measurement result of a secondary-carrier cell meets the preset condition, when the timer expires, the RNC again instructs, by delivering signaling such as an instruction message, the UE to measure and report signal quality of all secondary-carrier cells (M2, P1, and P2) configured for M1 at the F2 frequency.

In addition, optionally, in this embodiment of the present invention, the RNC determines the location of the UE and determines whether the UE moves. If the UE is in a motionless state within a time interval of the timer, when the timer expires, the RNC may simply restart the timer and does not need to deliver an instruction for inter-frequency measurement. In this embodiment of the present invention, the RNC may use a method and a process that are the same as in the prior art to determine the location of the UE. To avoid repeated description, descriptions of the method and the process are omitted herein.

Typically, signal quality of the UE in a same location remains unchanged (at different points of time, path losses of a signal in a spatial range are the same). Therefore, when the UE is not moving, it can be considered that signal quality of all secondary-carrier cells (M2, PI, and P2) configured for M1 at the F2 frequency does not change.

In this way, a quantity of measurements taken by the UE can be reduced, which in turn alleviates performance degradation of the UE due to the measurements and conserves communication resources.

According to the multi-carrier communication method in this embodiment of the present invention, only if it is determined that channel quality of a UE in a secondary-carrier cell meets a preset condition, the UE is instructed to measure and report signal quality of all secondary-carrier cells. In this way, a burden of the UE can be reduced, communication resources can be saved, and subscriber experience of the UE can be improved.

By way of example, the foregoing has illustrated an embodiment in which the RNC or the NodeB determines, according to channel quality of the UE in a secondary-carrier (F2) cell (M2), whether it is necessary to instruct the UE to measure and report the signal quality of all cells of F2. However, the present invention is not limited thereto. For example, in this embodiment of the present invention, the RNC may also periodically instruct the UE to measure and report the signal quality of all cells of F2.

In addition, for example, the time when UEs are instructed to perform inter-frequency measurement varies depending on capabilities of the UEs. If a UE has a relatively high capability, for example, the UE has a capability of skipping a compression mode during inter-frequency measurement, the UE can measure signal quality of a carrier of another frequency without affecting current communication on a current carrier, where the another carrier and the current carrier are at different frequencies and form a DC carrier group. Therefore, in this embodiment of the present invention, if the UE has a relatively high capability, the RNC may instruct the UE to periodically measure signal quality of all cells on a carrier of another frequency (a secondary carrier, which is the second carrier in this embodiment of the present invention) that forms a DC carrier group together with a primary carrier (the first carrier) on which the UE is currently located.

For another example, if the UE supports DC-HSUPA and DC-HSUPA is applied in the uplink, when the UE has two or more than two links in an active set of the secondary carrier (the second carrier), the RNC may instruct the UE to periodically measure and report signal quality of all cells of the secondary carrier. However, when the UE has only one link in the active set of the secondary carrier, the RNC may instruct the UE to stop measuring and reporting signal quality of all cells on the secondary carrier.

After the RNC acquires, from the UE, the signal quality of all secondary-carrier cells (M2, P1, and P2) configured for M1 at the F2 frequency, the RNC may select a cell with the best signal quality from M2, P1, and P2. For example, when the UE is located in P1, because P1 and M2 are same-frequency micro cells, signal strength of P1 is greater than signal strength of M2 and P2, that is to say, signal quality of P1 is the best among all cells of F2. Therefore, signal quality of P1 is the best among all cells reported by the UE. At this time, the RNC can determine that P1 is the cell whose signal quality is the best among cells that use F2.

Accordingly, the RNC may instruct the UE to use a DC carrier group formed by P1 and M1 in a DC formed by P1 and M1, so as to perform communication. In S220, the UE may perform communication by using F2 from P1 as a secondary carrier and using F1 from M1 as a primary carrier according to the instruction of the RNC. In addition, the method and the procedure for the communication may be the same as in the prior art. To avoid repeated description, descriptions of the method and the procedure are omitted herein. Descriptions of a same or similar case are omitted below.

Optionally, in this embodiment of the present invention, for example, if the UE is located in a border area between PI and M2, even if signal quality of PI measured by the UE is better than signal quality of the M2 cell measured by the UE, a CQI of the secondary carrier is still very poor due to strong interference and a relatively high throughput rate cannot be accomplished. Therefore, in this embodiment of the present invention, a determination is made as to whether a relationship between PI (the third cell) whose signal quality is the best and a current secondary-carrier cell M2 (the second cell) of the UE meets a preset condition (the third preset condition), and in a case in which the preset condition is met, the UE may be instructed to hand over from M2 to PI. In this embodiment of the present invention, a method and a process for handing over from M2 to PI by the UE may be the same as in the prior art. To avoid repeated description, descriptions of the method and the process are omitted herein.

Optionally, by way of example, a common pilot channel received signal code power (CPICH_RSCP, Common Pilot Channel_ Received Signal Code Power) may be used to represent signal quality. The RNC may determine whether a difference obtained by subtracting a CPICH_RSCP value of M2 (the second cell) from a CPICH_RSCP value of PI (the third cell) is greater than a preset threshold (the fourth preset threshold, for example, 3 dB). If the difference is greater than the preset threshold, the UE may be instructed to hand over from M2 to P1.

Optionally, by way of example, a signal-to-noise ratio of a common pilot channel, for example, the energy per chip/interference power density (CPICH Ec/I0, Common Pilot Channel_ Ec/I0) may be used to represent signal quality. The RNC may determine whether a difference obtained by subtracting a CPICH Ec/I0 value of M2 (the second cell) from a CPICH Ec/I0 value of PI (the third cell) is greater than a preset threshold (the fourth preset threshold, for example, 3 dB). If the difference is greater than the preset threshold, the UE may be instructed to hand over from M2 to PI.

It should be understood that the Ec/I0 is merely an example of the signal-to-noise ratio, but the present invention is not limited thereto. For example, the signal-to-noise ratio may also be energy per bit/noise power density (Eb/No).

Optionally, by way of example, a difference obtained by subtracting a CPICH path loss value from a CPICH transmit power value may be used to represent signal quality. The RNC may determine a difference (the first difference) obtained by subtracting a CPICH path loss value from a CPICH transmit power value of PI (the third cell), and determine a difference (the second difference) obtained by subtracting a CPICH path loss value from a CPICH transmit power value of M2 (the second cell), and then may determine whether a difference obtained by subtracting the second difference from the first difference is greater than a preset threshold (the fourth preset threshold, for example, 3 dB). If the difference obtained by subtracting the second difference from the first difference is greater than the preset threshold, the UE may be instructed to hand over from M2 to P1.

It should be understood that specific values of the preset thresholds are provided in an illustrative sense, and not in a restrictive sense. Any values may be used as the preset thresholds.

According to the multi-carrier communication method in this embodiment of the present invention, whether to instruct the UE to perform handover is determined according to a relationship between a cell whose signal quality is the best among all cells of the second carrier and a secondary-carrier cell selected currently by the UE, which can ensure that subscriber experience is improved and a burden of the UE is reduced.

Case c-2

Optionally, in this embodiment of the present invention, the second carrier is a primary carrier of the UE, and the first carrier is a secondary carrier of the UE; and

the step in which the user equipment UE reports signal quality of at least one cell of a second carrier to a network side device specifically includes:

the UE performs intra-frequency measurement on the at least one cell of the second carrier; and
the UE reports, to the network side device, the signal quality of the at least one cell of the second carrier obtained by means of the intra-frequency measurement.

Specifically, for example, as shown in FIG. 1a, the UE (a DC terminal) may use F1 (an example of the first carrier) as a secondary carrier and F2 (an example of the second carrier) as a primary carrier and establish downlink connections in M1 (an example of the first cell) and M2 (an example of the second cell). Herein, a method and a process for establishing downlink connections in M1 and M2 by the UE may be the same as in the prior art, and descriptions of the method and the process are omitted herein.

In the prior art, when the DC terminal enters, for example, P1, because coverage areas of P1 and M1 are different and antennas of P1 and M1 are at different sites, P1 and M1 cannot form a DC carrier group. Consequently, after entering P1, the UE fails to use a dual-carrier service, and subscriber experience is affected.

Correspondingly, in this embodiment of the present invention, P1 and M1 are used as a DC carrier group. Therefore, even if the UE enters P1, the RNC instructs the UE to establish downlink connections in the DC carrier group formed by P1 and M1, and the UE can still establish the downlink connections in the DC carrier group formed by PI and M1, thereby improving subscriber experience.

In this case, because the UE uses F2 as a primary carrier, in S210, the UE may perform intra-frequency measurement on all cells that operate at F2, and may report, according to an instruction of the RNC or proactively, a measurement result to the RNC.

The RNC may determine, according to the measurement result reported by the UE, that the best cell at F2 is PI (an example of the third cell).

The RNC may instruct the UE to use F2 as a primary carrier and F1 as a secondary carrier and to establish downlink connections by using the DC carrier group formed by PI and M1. In S220, the UE may follow the instruction of the RNC to use F2 as a primary carrier and F1 as a secondary carrier and establish downlink connections by using the DC carrier group formed by PI and M1. The process and the method for the DC communication may be the same as or similar to the prior art, and descriptions of the process and the method are omitted herein.

By way of example, the foregoing has illustrated a procedure in which the UE enters a PI or P2 area after downlink connections are established in M1 and M2, thereby triggering the network side device to implement the multi-carrier communication method 200 in this embodiment of the present invention, but the foregoing procedure is also applicable to a case in which the UE moves from PI to M2, the UE moves from P2 to M2, or the UE moves from M2 to P2. To avoid repeated description, descriptions of the procedure are omitted herein.

Case d

The UE may also enter an overlapping coverage area between M1 and M2 when no communication connection has been established, so that the UE can perform communication by using a DC carrier group formed by M1 and M2, a DC carrier group formed by M1 and PI, or a DC carrier group formed by M1 and P2.

Optionally, the method further includes:

the UE sends, via the first carrier, an access request message for requesting access to the first cell to the network side device, and communicates, according to the instruction of the network side device, with the first cell via the first carrier; and

the step in which the user equipment UE reports signal quality of at least one cell of a second carrier to a network side device includes:

the UE measures the signal quality of the at least one cell of the second carrier; and
the UE adds the measured signal quality of the at least one cell of the second carrier to the access request message sent to the network side device.

Specifically, in this case, when the UE is in an access state, in S210, the UE may measure signal quality of all cells of all carriers, so that the signal quality of all cells of all carriers measured by the UE can be carried in the access request message sent to the RNC (or the NodeB), and therefore, in S210, the RNC can determine the signal quality of all cells from the access request message.

The RNC may determine the best cell at F2 according to a measurement result reported by the UE. For example, when the UE is located in PI, signal strength is the strongest and signal quality is the best in P1. Therefore, PI is a cell (the third cell) with the best signal quality at F2.

The RNC may instruct the UE to establish downlink connections in the DC carrier group formed by PI and M1. In S220, the UE may use F2 as a primary carrier and F1 as a secondary carrier and establish downlink connections in the DC carrier group formed by PI and M1, or may use F2 as a secondary carrier and F1 as a primary carrier and establish downlink connections in the DC carrier group formed by PI and M1, which is not limited in the present invention.

It should be noted that by way of example, the foregoing has illustrated an embodiment in which the UE measures and reports, according to an instruction of the RNC or periodically, signal quality of all cells of F2 (a carrier on which multiple cells exist). However, the present invention is not limited thereto. For example, if the RNC can learn about coverage areas (or a geographic location and radiant power of an antenna) of all cells at F2 and a location of the UE, a cell (the third cell) with the best signal quality at F2 can be determined according to the location of the UE and the coverage areas of the cells, provided that only an impact of path loss on signal quality is taken into consideration (an impact of an obstacle, such as a building, on signal quality is ignored). Descriptions of a same or similar case are omitted below.

Case 5

As shown in FIG. 1b, for example, two micro cells P1 and P2 are deployed at a frequency F2, and one macro cell M1 is deployed at a frequency F1. In this embodiment of the present invention, antennas of P1 and M1 are at different sites (in different geographic locations), and coverage areas of P1 and M1 are also different; therefore, the RNC (an example of the network side device) may pre-use P1 and M1 as a DC carrier group, or likewise may use the P2 cell and M1 as a DC carrier group.

Because two cells (P1 and P2) are deployed at F2, signal quality of the UE at F2 may change as the UE moves between the P1 and P2 cells. For this reason, in S210, the UE may measure and send, to the RNC (an example of the network side device), signal quality of all cells (P1 and P2) at F2 (an example of the second carrier) measured by the UE. The process and the method for measuring and reporting, by the UE, the signal quality of all cells that operate at F2 may be similar to the process and the method described in Case 4. To avoid repeated description, descriptions of the process and the method are omitted herein.

For example, when the UE is located within a common coverage area between F2 and F1 (for example, when the UE is located in the P1 cell) and signal quality of P1 is the best among all cells of F2 measured by the UE, the RNC may determine a cell (the third cell) whose signal quality is the best among all cells of F2 measured by the UE, and accordingly, the RNC may instruct the UE to perform communication by using the DC carrier group formed by P1 and M1. In addition, in S220, the UE may use F2 as a primary carrier and F1 as a secondary carrier and establish downlink connections in the DC carrier group formed by P1 and M1, or may use F2 as a secondary carrier and F1 as a primary carrier and establish downlink connections in the DC carrier group formed by P1 and M1, which is not limited in the present invention.

Optionally, in this embodiment of the present invention, before the UE communicates, according to an instruction of the network side device, with the first cell of the first carrier via the first carrier while communicating with the third cell via the second carrier, the UE is in a state that the UE communicates only with the first cell via the first carrier.

Specifically, in this embodiment of the present invention, because P1 and P2 are micro cells and their coverage areas are smaller than a coverage area of M1, there may be a case in which the UE is located outside the coverage areas of P1 and P2 but is located inside the coverage area of M1. In this case, the UE can perform communication only by using F1 from M1.

Optionally, before the UE communicates, according to an instruction of the network side device, with the first cell of the first carrier via the first carrier while communicating with the third cell via the second carrier, the UE is in a state that the UE communicates only with the first cell via the first carrier.

Specifically, when the UE moves to a coverage area of PI or P2, it indicates that the UE may establish downlink connections by using the DC carrier group formed by P1 and M1 or the DC carrier group formed by P2 and M1. Therefore, when the UE can perform communication only by using F1 from M1, the RNC may instruct (for example, by using an instruction message) the UE to measure signal quality of all cells (P1 and P2) at F2, and in S210, the UE may measure and report the signal quality of all cells of F2 according to the instruction of the RNC. Therefore, when the UE moves to the coverage area of P1 or P2, signal quality of F2 reported by the UE is significantly improved, and the RNC may determine a cell (the third cell) whose signal quality is the best among all cells of F2 measured by the UE, and accordingly, the RNC may instruct the UE to perform communication by using the DC carrier group formed by the cell (P1 or P2) with the best signal quality and M1. In addition, in S220, the UE may use F2 as a primary carrier and F1 as a secondary carrier and establish downlink connections in the DC carrier group formed by P1 and M1, or may use F2 as a secondary carrier and F1 as a primary carrier and establish downlink connections in the DC carrier group formed by P1 and M1, which is not limited in the present invention.

Optionally, the method further includes:

the UE sends, via the first carrier, an access request message for requesting access to the first cell to the network side device, and communicates, according to the instruction of the network side device, with the first cell via the first carrier; and
the step in which the user equipment UE reports signal quality of at least one cell of a second carrier to a network side device includes:

the UE measures the signal quality of the at least one cell of the second carrier; and
the UE adds the measured signal quality of the at least one cell of the second carrier to the access request message sent to the network side device.

Specifically, in this embodiment of the present invention, the UE may also enter, when no downlink connection has been established, a DC carrier group formed by M1 and M2 or a DC carrier group formed by M1 and P2.

In this case, when the UE is in an access state, in S210, the UE may measure signal quality of all cells of all carriers, so that the signal quality of all cells of all carriers measured by the UE can be carried in the access request message sent to the RNC (or the NodeB), and therefore, the RNC can determine the signal quality of all cells from the access request message.

The RNC may determine the best cell at F2 according to a measurement result reported by the UE. For example, when the UE is located in PI, signal strength is the strongest and signal quality is the best in P1. Therefore, PI is a cell (the third cell) with the best signal quality at F2.

The RNC may instruct the UE to establish downlink connections in the DC carrier group formed by P1 and M1. In S220, the UE may use F2 as a primary carrier and F1 as a secondary carrier and establish downlink connections in the DC carrier group formed by P1 and M1, or may use F2 as a secondary carrier and F1 as a primary carrier and establish downlink connections in the DC carrier group formed by P1 and M1, which is not limited in the present invention.

Optionally, the method further includes:

the UE sends, via the first carrier, an access request message for requesting access to the first cell to the network side device, and communicates, according to an instruction of the network side device, with the first cell via the first carrier; and

the step in which the user equipment UE reports signal quality of at least one cell of a second carrier to a network side device includes:

the UE receives an instruction of the network side device;

the UE measures the signal quality of the at least one cell of the second carrier according to the instruction of the network side device; and

the UE reports the measured signal quality of the at least one cell of the second carrier to the network side device.

Specifically, in this embodiment of the present invention, the UE may also enter an M1 area when no downlink connection has been established, so that the UE can perform communication by using a DC carrier group formed by M1 and P1 or a DC carrier group formed by M1 and P2.

In this case, the UE may be located inside the coverage area of PI or P2 or may be located outside the coverage area of 1 or P2. Therefore, the RNC may instruct the UE to measure quality of all cells of F2, and in S210, the UE may measure and report the quality of all cells of F2 according to the instruction of the RNC.

The RNC may determine the best cell at F2 according to a measurement result reported by the UE. For example, when the UE is located in PI, signal strength is the strongest and signal quality is the best in P1. Therefore, PI is a cell (the third cell) with the best signal quality at F2.

The RNC may instruct the UE to establish downlink connections in the DC carrier group formed by P1 and M1. In S220, the UE may use F2 as a primary carrier and F1 as a secondary carrier and establish downlink connections in the DC carrier group formed by P1 and M1, or may use F2 as a secondary carrier and F1 as a primary carrier and establish downlink connections in the DC carrier group formed by P1 and M1, which is not limited in the present invention.

Case 6

As shown in FIG. 1c, beam directions of carriers F1 and F2 from a base station A are different (an antenna downtilt of F1 is different from an antenna downtilt of F2), and likewise, beam directions of carriers F1 and F2 from a base station B are different.

For example, in an area B, the antenna downtilt of F2 is smaller than the antenna downtilt of F1, and therefore in the direction of from F2 to the UE, a path loss is relatively small and strength is relatively strong. This means that signal quality of F1 is better than signal quality of F1, but a coverage area of F1 is smaller than a coverage area of F1, namely, Y2 is smaller than X2. Likewise, in an area C, the antenna downtilt of F1 is smaller than the antenna downtilt of F2, and therefore in the direction of from F1 to the UE, a path loss is relatively small and strength is relatively strong. This means that signal quality of F1 is better than signal quality of F2, but a coverage area of F1 is smaller than a coverage area of F2, namely, X1 is smaller than Y1.

In an area A, antennas of F1 and F2 are at different sites (in different geographic locations) and coverage areas of F1 and F2 are also different, F2 (an example of the second carrier) and F1 (an example of the first carrier) are different carriers (specifically, F1 and F2 are at different frequencies), and the RNC (an example of the network side device) may use X2 and Y1 as a DC carrier group in the area A.

In the area B, coverage areas of F1 and F2 are different, F2 (an example of the second carrier) and F1 (an example of the first carrier) are different carriers (specifically, F1 and F2 are at different frequencies), and the RNC (an example of the network side device) may use X2 and Y2 as a DC carrier group in the area B.

In the area C, coverage areas of F1 and F2 are different, F2 (an example of the second carrier) and F1 (an example of the first carrier) are different carriers (specifically, F1 and F2 are at different frequencies), and the RNC (an example of the network side device) may use X1 and Y1 as a DC carrier group in the area C.

When the UE has performed communication by using F1 and F2, for ease of understanding, the following is described by assuming that the UE has been located in the area B and the UE performs communication by using F1 as a primary carrier and F2 as a secondary carrier.

In the prior art, for example, when the UE moves from the area B to the area A, a signal of F2 from the base station B has relatively poor signal quality and even disappears, and the UE cannot continue to use F2 from the base station B to perform communication.

Correspondingly, in this embodiment of the present invention, the UE may measure and report, to the RNC, signal quality of all cells of F2 (specifically, a cell Y1 on F2 from the base station A and a cell Y2 on F2 from the base station B). The process and the method for measuring and reporting, by the UE, the signal quality of all cells that operate at F2 may be the same as the process and the method described in Case 4. To avoid repeated description, descriptions of the process and the method are omitted herein.

Because the area A is located outside Y2 and located inside Y1, signal quality of Y1 is the best among all cells of F2 measured by the UE. The RNC may determine that Y1 is the cell with the best signal quality at F2.

Accordingly, the RNC may instruct the UE to establish downlink connections in a carrier group formed by Y1 and X2. In S220, the UE may perform communication by using F1 as a primary carrier and F2 as a secondary carrier according to the instruction of the RNC. The process for the DC communication may be the same as in the prior art, and descriptions of the process are omitted herein.

It should be understood that by way of example, the foregoing has illustrated an embodiment in which the UE moves from the area B to the area A, but the foregoing procedure is also applicable to a case in which the UE moves from the area C to the area A, the UE moves from the area A to the area B, or the UE moves from the area A to the area C.

In addition, by way of example, the foregoing has illustrated an embodiment in which the UE uses F1 as a primary carrier and F2 as a secondary carrier, but the present invention is not limited thereto; the UE may also use F2 as a primary carrier and F1 as a secondary carrier.

According to the multi-carrier communication method in this embodiment of the present invention, a network side device determines, according to signal quality measured by a UE, a third cell whose signal quality is the best among at least one cell of a second carrier, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience of the UE.

In the above description, the multi-carrier communication method according to this embodiment of the present invention is described in detail with reference to FIG. 1 to FIG. 3. A multi-carrier communication apparatus according to an embodiment of the present invention is described below in detail with reference to FIG. 4 to FIG. 5.

FIG. 4 shows a schematic block diagram of a multi-carrier communication apparatus 300 according to an embodiment of the present invention. As shown in FIG. 4, the apparatus 300 includes:

> an acquiring unit 310, configured to acquire signal quality of at least one cell of a second carrier measured by a user equipment UE;
> a determining unit 320, configured to determine, according to the signal quality of the at least one cell of the second carrier measured by the UE, a third cell whose signal quality is the best among the at least one cell of the second carrier; and
> an instructing unit 330, configured to instruct the UE to communicate with a first cell of the first carrier via the first carrier while communicating with the third cell via the second carrier, where the first carrier is different from the second carrier, and antennas of the third cell and the first cell are at different geographic locations.

Optionally, the determining unit 320 is further configured to determine that the UE is in a state that the UE communicates with a second cell of the second carrier via the second carrier while communicating with the first cell via the first carrier; and

the instructing unit 330 is specifically configured to instruct the UE to hand over from the second cell to the third cell on the second carrier, so that the UE communicates with the first cell via the first carrier while communicating with the third cell via the second carrier.

Optionally, the first carrier is a primary carrier of the UE and the second carrier is a secondary carrier of the UE.

Optionally, the instructing unit 330 is further configured to instruct the UE to measure the signal quality of the at least one cell of the second carrier; and

the acquiring unit 310 is specifically configured to acquire the signal quality of the at least one cell of the second carrier measured, according to the instruction of the network side device, by the UE.

Optionally, the determining unit 320 is specifically configured to determine that a channel quality indicator CQI value of the UE in the second cell meets a first preset condition; or

configured to determine that a relationship between a CQI value of the UE in the first cell and a CQI value of the UE in the second cell meets a second preset condition; and

the instructing unit 330 is specifically configured to: after the determining unit determines that the channel quality indicator CQI value of the UE in the second cell meets the first preset condition or determines that the relationship between the CQI value of the UE in the first cell and the CQI value of the UE in the second cell meets the second preset condition, instruct the UE to measure the signal quality of the at least one cell of the second carrier.

Optionally, the determining unit 320 is specifically configured to acquire the CQI value of the UE in the second cell; and

configured to determine that the CQI value of the UE in the second cell is less than a first preset threshold.

Optionally, the determining unit 320 is specifically configured to acquire the CQI value of the UE in the first cell and the CQI value of the UE in the second cell; and

configured to determine that the CQI value of the UE in the second cell is less than a second preset threshold, and determine that a difference obtained by subtracting the CQI value of the UE in the second cell from the CQI value of the UE in the first cell is greater than a third preset threshold.

Optionally, the CQI value is a sampling value or a filtering value within a first preset time.

Optionally, the instructing unit 330 is further configured to instruct the UE to periodically measure signal quality of at least two cells of the second carrier.

Optionally, the determining unit 320 is further configured to determine a location of the UE within a second preset time; and

configured to determine that the UE is in a moving state according to the location within the second preset time; and

the instructing unit 330 is specifically configured to instruct, when the determining unit determines that the UE is in a moving state, the user equipment UE to measure the signal quality of the at least one cell of the second carrier.

Optionally, the determining unit 320 is further configured to determine signal quality of the third cell and signal quality of the second cell; and

configured to determine that a relationship between the signal quality of the third cell and the signal quality of the second cell meets a third preset condition; and

the instructing unit 330 is specifically configured to: when the determining unit determines that the relationship between the signal quality of the third cell and the signal quality of the second cell meets the third preset condition, instruct the UE to hand over from the second cell to the third cell on the second carrier.

Optionally, the determining unit 320 is specifically configured to determine the signal quality of the third cell according to a common pilot channel received signal code power CPICH_RSCP value of the third cell;

configured to determine the signal quality of the second cell according to a CPICH_RSCP value of the second cell; and configured to determine that a difference obtained by subtracting the CPICH_RSCP value of the second cell from the CPICH_RSCP value of the third cell is greater than a fourth preset threshold.

Optionally, the determining unit 320 is specifically configured to determine the signal quality of the third cell according to a CPICH energy per chip/interference power density Ec/I0 value of the third cell;

configured to determine the signal quality of the second cell according to a CPICH Ec/I0 value of the second cell; and configured to determine that a difference obtained by subtracting the CPICH Ec/I0 value of the second cell from the CPICH Ec/I0 value of the third cell is greater than a fifth preset threshold.

Optionally, the determining unit 320 is specifically configured to determine the signal quality of the third cell according to a first difference obtained by subtracting a CPICH path loss value from a CPICH transmit power value of the third cell;

configured to determine the signal quality of the second cell according to a second difference obtained by subtracting a CPICH path loss value from a CPICH transmit power value of the second cell; and

configured to determine that a difference obtained by subtracting the second difference from the first difference is greater than a sixth preset threshold.

Optionally, the second carrier is a primary carrier of the UE and the first carrier is a secondary carrier of the UE; and

the acquiring unit 310 is specifically configured to acquire the signal quality of the at least one cell of the second carrier measured, by performing intra-frequency measurement, by the UE.

Optionally, the determining unit 320 is further configured to determine that the UE is in a state that the UE communicates only with the first cell via the first carrier.

Optionally, the instructing unit 330 is further configured to instruct the UE to measure the signal quality of the at least one cell of the second carrier; and

the acquiring unit 310 is specifically configured to acquire the signal quality of the at least one cell of the second carrier measured, according to the instruction of the network side device, by the UE.

Optionally, the determining unit 320 is further configured to receive an access request message sent on the first carrier by the UE for requesting access to the first cell, and determine, according to the access request message, that the UE communicates with the first cell via the first carrier; and

the acquiring unit 310 is specifically configured to acquire, from the access request message, the signal quality of the at least one cell of the second carrier measured by the UE.

Optionally, the determining unit 320 is further configured to receive an access request message sent on the first carrier by the UE for requesting access to the first cell, and determine, according to the access request message, that the UE communicates with the first cell via the first carrier;

the instructing unit 330 is further configured to instruct the UE to measure the signal quality of the at least one cell of the second carrier; and

the acquiring unit 310 is further configured to acquire the signal quality of the at least one cell of the second carrier measured, according to the instruction of the network side device, by the UE.

Optionally, the determining unit 320 is further configured to acquire capability information of the UE, and determine that the UE is a user equipment with a multi-carrier capability.

The multi-carrier communication apparatus 300 according to this embodiment of the present invention may be corresponding to the network side device (for example, the RNC) in the method of the foregoing embodiment of the present invention. In addition, all units, that is, modules, and the foregoing other operations and/or functions of the multi-carrier communication apparatus 300 separately implement corresponding procedures in the method 100 in FIG. 2. For brevity, details are not repeated herein.

According to the multi-carrier communication apparatus in this embodiment of the present invention, a network side device determines, according to signal quality measured by a UE, a third cell whose signal quality is the best among at least one cell of a second carrier, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

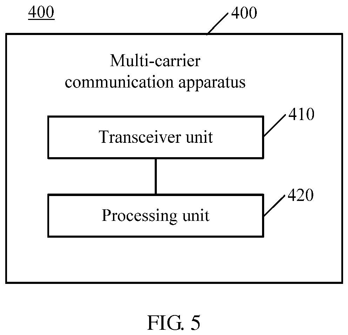

FIG. 5 shows a schematic block diagram of a multi-carrier communication apparatus 400 according to an embodiment of the present invention. As shown in FIG. 5, the apparatus 400 includes:

a transceiver unit 410, configured to report signal quality of at least one cell of a second carrier to a network side device, so that the network side device determines a third cell whose signal quality is the best among the at least one cell of the second carrier and instructs the UE to communicate with a first cell of the first carrier via the first carrier while communicating with the third cell via the second carrier; and

a processing unit 420, configured for the UE to communicate, according to the instruction of the network side device, with the first cell of the first carrier via the first carrier while communicating with the third cell via the second carrier, where the first carrier is different from the second carrier, and antennas of the third cell and the first cell are at different geographic locations.

Optionally, before the UE communicates, according to the instruction of the network side device, with the first cell of the first carrier via the first carrier while communicating with the third cell via the second carrier, the UE is in a state that the UE communicates with a second cell of the second carrier via the second carrier while communicating with the first cell via the first carrier; and

the processing unit 420 is specifically configured to hand over from the second cell to the third cell on the second carrier according to the instruction of the network side device, so as to communicate with the first cell via the first carrier while communicating with the third cell via the second carrier.

Optionally, the first carrier is a primary carrier of the UE and the second carrier is a secondary carrier of the UE.

Optionally, the transceiver unit 410 is specifically configured to receive an instruction of the network side device;

the processing unit 420 is specifically configured to measure the signal quality of the at least one cell of the second carrier according to the instruction of the network side device; and

the transceiver unit 410 is specifically configured to report the measured signal quality of the at least one cell of the second carrier to the network side device.

Optionally, the second carrier is a primary carrier of the UE and the first carrier is a secondary carrier of the UE;

the processing unit 420 is specifically configured to perform intra-frequency measurement on the at least one cell of the second carrier; and

the transceiver unit 410 is specifically configured to report, to the network side device, the signal quality of the at least one cell of the second carrier obtained by means of the intra-frequency measurement.

Optionally, before the UE communicates, according to the instruction of the network side device, with the first cell of the first carrier via the first carrier while communicating with the third cell via the second carrier, the UE is in a state that the UE communicates only with the first cell via the first carrier.

Optionally, the transceiver unit is specifically configured to receive an instruction of the network side device;

the processing unit 420 is specifically configured to measure the signal quality of the at least one cell of the second carrier according to the instruction of the network side device; and

the transceiver unit 410 is specifically configured to report the measured signal quality of the at least one cell of the second carrier to the network side device.

Optionally, the transceiver unit 410 is further configured to send via the first carrier an access request message for requesting access to the first cell to the network side device;

the processing unit 420 is further configured to communicate, according to an instruction of the network side device, with the first cell via the first carrier;

the processing unit 420 is specifically configured to measure the signal quality of the at least one cell of the second carrier; and

the transceiver unit 410 is specifically configured to add the measured signal quality of the at least one cell of the second carrier to the access request message sent to the network side device.

Optionally, the transceiver unit 410 is further configured to send via the first carrier an access request message for requesting access to the first cell to the network side device;

the processing unit 420 is further configured to communicate, according to an instruction of the network side device, with the first cell via the first carrier;

the transceiver unit 410 is further configured to receive an instruction of the network side device;

the processing unit 420 is specifically configured to measure the signal quality of the at least one cell of the second carrier according to the instruction of the network side device; and

the transceiver unit 410 is specifically configured to report the measured signal quality of the at least one cell of the second carrier to the network side device.

Optionally, the UE is a user equipment with a multi-carrier capability.

The multi-carrier communication apparatus 400 according to this embodiment of the present invention may be corresponding to the user equipment UE (which, specifically, is a multi-carrier terminal) in the method in the foregoing embodiment of the present invention. In addition, all units, that is, modules, and the foregoing other operations and/or functions of the multi-carrier communication apparatus 400 separately implement corresponding procedures in the method 200 in FIG. 3. For brevity, details are not repeated herein.

According to the multi-carrier communication apparatus in this embodiment of the present invention, a network side device determines, according to signal quality measured by a UE, a third cell whose signal quality is the best among at least one cell of a second carrier, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

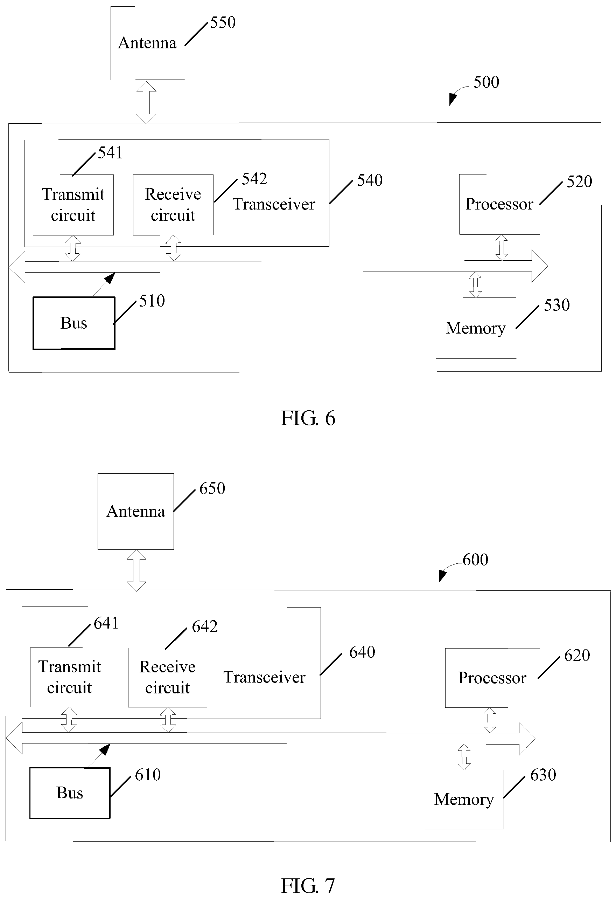

The multi-carrier communication method according to this embodiment of the present invention is described above in detail with reference to FIG. 1 to FIG. 3. A multi-carrier communication device according to an embodiment of the present invention is described below in detail with reference to FIG. 6 to FIG. 7.

FIG. 6 shows a schematic block diagram of a multi-carrier communication device 500 according to an embodiment of the present invention. As shown in FIG. 6, the device 500 includes:

> a bus 510;
> a processor 520 connected to the bus;
> a memory 530 connected to the bus; and
> a transceiver 540 connected to the bus; where:

> > the processor 520 invokes, by means of the bus 510, a program stored in the memory 530, so as to be configured to control the transceiver 540 to acquire signal quality of at least one cell of a second carrier measured by a user equipment UE;
> > configured to determine, according to the signal quality of the at least one cell of the second carrier measured by the UE, a third cell whose signal quality is the best among the at least one cell of the second carrier; and
> > configured to control the transceiver 540 to instruct the UE to communicate with a first cell of the first carrier via the first carrier while communicating with the third cell via the second carrier, where the first carrier is different from the second carrier, and antennas of the third cell and the first cell are at different geographic locations.

Optionally, the processor 520 is specifically configured to: before controlling the transceiver 540 to instruct the UE to communicate with the first cell of the first carrier via the first carrier while communicating with the third cell via the second carrier, determine that the UE is in a state that the UE communicates with a second cell of the second carrier via the second carrier while communicating with the first cell via the first carrier; and

configured to control the transceiver 540 to instruct the UE to hand over from the second cell to the third cell on the second carrier, so that the UE communicates with the first cell via the first carrier while communicating with the third cell via the second carrier.

Optionally, the first carrier is a primary carrier of the UE and the second carrier is a secondary carrier of the UE.

Optionally, the processor 520 is specifically configured to control the transceiver 540 to instruct the UE to measure the signal quality of the at least one cell of the second carrier; and

control the transceiver 540 to acquire the signal quality of the at least one cell of the second carrier measured, according to the instruction of the network side device, by the UE.

Optionally, the processor 520 is specifically configured to determine that a channel quality indicator CQI value of the UE in the second cell meets a first preset condition; or

determine that a relationship between a CQI value of the UE in the first cell and a CQI value of the UE in the second cell meets a second preset condition; and

control the transceiver 540 to instruct the UE to measure the signal quality of the at least one cell of the second carrier.

Optionally, the processor 520 is specifically configured to control the transceiver 540 to acquire the CQI value of the UE in the second cell; and
configured to determine that the CQI value of the UE in the second cell is less than a first preset threshold.

Optionally, the processor 520 is specifically configured to control the transceiver 540 to acquire the CQI value of the UE in the first cell and the CQI value of the UE in the second cell; and
configured to determine that the CQI value of the UE in the second cell is less than a second preset threshold, and determine that a difference obtained by subtracting the CQI value of the UE in the second cell from the CQI value of the UE in the first cell is greater than a third preset threshold.

Optionally, the CQI value is a sampling value or a filtering value within a first preset time.

Optionally, the processor 520 is specifically configured to control the transceiver 540 to instruct the UE to periodically measure signal quality of at least two cells of the second carrier.

Optionally, the processor 520 is specifically configured to determine a location of the UE within a second preset time;
configured to determine that the UE is in a moving state according to the location within the second preset time; and
configured to control the transceiver 540 to instruct the user equipment UE to measure the signal quality of the at least one cell of the second carrier.

Optionally, the processor 520 is specifically configured to determine signal quality of the third cell and signal quality of the second cell;
configured to determine that a relationship between the signal quality of the third cell and the signal quality of the second cell meets a third preset condition; and
configured to control the transceiver 540 to instruct the UE to hand over from the second cell to the third cell on the second carrier.

Optionally, the processor 520 is specifically configured to determine the signal quality of the third cell according to a common pilot channel received signal code power CPICH_RSCP value of the third cell;
configured to determine the signal quality of the second cell according to a CPICH_RSCP value of the second cell; and
configured to determine that a difference obtained by subtracting the CPICH_RSCP value of the second cell from the CPICH_RSCP value of the third cell is greater than a fourth preset threshold.

Optionally, the processor 520 is specifically configured to determine the signal quality of the third cell according to a CPICH energy per chip/interference power density Ec/I0 value of the third cell;
configured to determine the signal quality of the second cell according to a CPICH Ec/I0 value of the second cell; and
configured to determine that a difference obtained by subtracting the CPICH Ec/I0 value of the second cell from the CPICH Ec/I0 value of the third cell is greater than a fifth preset threshold.

Optionally, the processor 520 is specifically configured to determine the signal quality of the third cell according to a first difference obtained by subtracting a CPICH path loss value from a CPICH transmit power value of the third cell;
configured to determine the signal quality of the second cell according to a second difference obtained by subtracting a CPICH path loss value from a CPICH transmit power value of the second cell; and
configured to determine that a difference obtained by subtracting the second difference from the first difference is greater than a sixth preset threshold.

Optionally, the second carrier is a primary carrier of the UE and the first carrier is a secondary carrier of the UE; and
the processor 520 is specifically configured to control the transceiver 540 to acquire the signal quality of the at least one cell of the second carrier measured, by performing intra-frequency measurement, by the UE.

Optionally, the processor 520 is specifically configured to: before the network side device instructs the UE to communicate with the first cell of the first carrier via the first carrier while communicating with the third cell via the second carrier, determine that the UE is in a state that the UE communicates only with the first cell via the first carrier.

Optionally, the processor 520 is specifically configured to control the transceiver 540 to instruct the UE to measure the signal quality of the at least one cell of the second carrier; and
configured to control the transceiver 540 to acquire the signal quality of the at least one cell of the second carrier measured, according to the instruction of the network side device, by the UE.

Optionally, the processor 520 is specifically configured to control the transceiver 540 to receive an access request message sent on the first carrier by the UE for requesting access to the first cell, and determine, according to the access request message, that the UE communicates with the first cell via the first carrier; and
configured to acquire, from the access request message, the signal quality of the at least one cell of the second carrier measured by the UE.

Optionally, the processor 520 is specifically configured to control the transceiver 540 to receive an access request message sent on the first carrier by the UE for requesting access to the first cell, and determine, according to the access request message, that the UE communicates with the first cell via the first carrier;
configured to control the transceiver 540 to instruct the UE to measure the signal quality of the at least one cell of the second carrier; and

configured to control the transceiver 540 to acquire the signal quality of the at least one cell of the second carrier measured, according to the instruction of the network side device, by the UE.

Optionally, the processor 520 is specifically configured to acquire capability information of the UE, and determine that the UE is a user equipment with a multi-carrier capability.

The processor 520 controls operations of the device 500. The processor 520 may also be termed as a CPU. The memory 530 may include a read-only memory and a random access memory, and provide an instruction and data to the processor 520. A part of the memory 530 may further include a non-volatile random access memory (NVRAM). In a specific application, the device 500 may be built in or may be, for example, a base station device, or may include the transceiver 540, where the transceiver 540 accommodates a transmit circuit 541 and a receive circuit 542, so as to allow data transmission and receiving between the device 500 and a remote location. The transmit circuit 541 and the receive circuit 542 may be coupled to an antenna 550. All components of the device 500 may be coupled together by using the bus 510, where the bus 510 further includes a power bus, a control bus, and a status signal bus in addition to a data bus. However, for clarity, all kinds of buses are marked as the bus 510 in the diagrams. The device 500 may further include a processing unit used for processing a signal, and besides, may further include a power controller and a decoding processor. In specific different products, the decoder may be integrated with the processing unit.

The processor may implement or execute steps and logical block diagrams disclosed in the method embodiments of the present invention. A general purpose processor may be a microprocessor or the processor may also be any conventional processor, decoder, and the like. Steps of the methods disclosed with reference to the embodiments of the present invention may be directly executed and accomplished by means of a hardware processor, or may be executed and accomplished by using a combination of hardware and software modules in the decoding processor. The software module may be located in a mature storage medium in the field, such as a random access memory, a flash memory, a read-only memory, a programmable read-only memory, an electrically-erasable programmable memory or a register. The storage medium is located in the memory, and a decoding unit or processor reads information in the memory and accomplishes the steps in the foregoing methods in combination with hardware of the decoding unit or processing unit.

The processor 520 may be a central processing unit (Central Processing Unit, CPU for short), and the processor may also be another general purpose processor, a digital signal processor (DSP), an application-specific integrated circuit (ASIC), a field programmable gate array (FPGA) or another programmable logical apparatus, a discrete gate or transistor logic, or a discrete hardware component. The general purpose processor may be a microprocessor, or the processor may also be any conventional processor or the like.

The memory may include a read-only memory and a random access memory, and provide an instruction and data to the processor. A part of the memory may further include a non-volatile random access memory. For example, the memory may further store information about a device type.

The bus system may further include the power bus, the control bus, and the status signal bus in addition to the data bus. However, for clarity, all kinds of buses are marked as the bus system in the diagrams.

In an implementation, the steps of the method may be implemented by an integrated logical circuit of hardware in the processor, or by a software instruction. Steps of the methods disclosed with reference to the embodiments of the present invention may be directly executed and accomplished by means of a hardware processor, or may be executed and accomplished by using a combination of hardware and software modules in the processor. The software module may be located in a mature storage medium in the field, such as a random access memory, a flash memory, a read-only memory, a programmable read-only memory, an electrically-erasable programmable memory or a register. The storage medium is located in the memory, and a processor reads information in the memory and accomplishes the steps in the foregoing methods in combination with hardware of the processor. To avoid repetition, no specific description is provided herein again.

The multi-carrier communication device 500 according to this embodiment of the present invention may be corresponding to the network side device (for example, the RNC) in the method of the foregoing embodiment of the present invention. In addition, all units, that is, modules, and the foregoing other operations and/or functions of the multi-carrier communication device 500 separately implement corresponding procedures in the method 100 in FIG. 2. For brevity, details are not repeated herein.

According to the multi-carrier communication device in this embodiment of the present invention, a network side device determines, according to signal quality measured by a UE, a third cell whose signal quality is the best among at least one cell of a second carrier, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

FIG. 7 shows a schematic block diagram of a multi-carrier communication device 600 according to an embodiment of the present invention. As shown in FIG. 7, the device 600 includes:

a bus 610;
a processor 620 connected to the bus;
a memory 630 connected to the bus; and
a transceiver 640 connected to the bus; where:

the processor 620 invokes, by means of the bus 610, a program stored in the memory 630, so as to be configured to enable a user equipment to control the transceiver 640 to report signal quality of at least one cell of a second carrier to a network side device, so that the network side device determines a third cell whose signal quality is the best among the at least one cell of the second carrier and instructs the UE to communicate with a first cell of the first carrier via the first carrier while communicating with the third cell via the second carrier; and configured to communicate, according to the instruction of the network side device, with the first cell of the first carrier via the first carrier while communicating with the third cell via the second carrier, where the first carrier is different from the second carrier, and antennas of the third cell and the first cell are at different geographic locations.

Optionally, before the UE communicates, according to the instruction of the network side device, with the first cell of the first carrier via the first carrier while communicating with the third cell via the second carrier, the UE is in a state that the UE communicates with a second cell of the second carrier via the second carrier while communicating with the first cell via the first carrier; and

the processor 620 is specifically configured to hand over from the second cell to the third cell on the second carrier according to the instruction of the network side device, so as to communicate with the first cell via the first carrier while communicating with the third cell via the second carrier.

Optionally, the first carrier is a primary carrier of the UE and the second carrier is a secondary carrier of the UE.

Optionally, the processor 620 is specifically configured to control the transceiver 640 to receive the instruction of the network side device;

configured to measure the signal quality of the at least one cell of the second carrier according to the instruction of the network side device; and

configured to control the transceiver 640 to report the measured signal quality of the at least one cell of the second carrier to the network side device.

Optionally, the second carrier is a primary carrier of the UE and the first carrier is a secondary carrier of the UE; and

the processor 620 is specifically configured to perform intra-frequency measurement on the at least one cell of the second carrier; and

configured to control the transceiver 640 to report, to the network side device, the signal quality of the at least one cell of the second carrier obtained by means of the intra-frequency measurement.

Optionally, before the UE communicates, according to the instruction of the network side device, with the first cell of the first carrier via the first carrier while communicating with the third cell via the second carrier, the UE is in a state that the UE communicates only with the first cell via the first carrier.

Optionally, the processor 620 is specifically configured to control the transceiver 640 to receive the instruction of the network side device;

configured to measure the signal quality of the at least one cell of the second carrier according to the instruction of the network side device; and

configured to control the transceiver 640 to report the measured signal quality of the at least one cell of the second carrier to the network side device.

Optionally, the processor 620 is specifically configured to control the transceiver 640 to send, via the first carrier, an access request message for requesting access to the first cell to the network side device, and control the transceiver to communicate, according to the instruction of the network side device, with the first cell via the first carrier;

configured to measure the signal quality of the at least one cell of the second carrier; and

configured to control the transceiver 640 to add the measured signal quality of the at least one cell of the second carrier to the access request message sent to the network side device.

Optionally, the processor 620 is specifically configured to control the transceiver 640 to send, via the first carrier, an access request message for requesting access to the first cell to the network side device, and control the transceiver to communicate, according to an instruction of the network side device, with the first cell via the first carrier;

configured to control the transceiver 640 to receive an instruction of the network side device;

configured to measure the signal quality of the at least one cell of the second carrier according to the instruction of the network side device; and

configured to control the transceiver 640 to report the measured signal quality of the at least one cell of the second carrier to the network side device.

Optionally, the UE is a user equipment with a multi-carrier capability.

The processor 620 controls operations of the device 600. The processor 620 may also be termed as a CPU. The memory 630 may include a read-only memory and a random access memory, and provide an instruction and data to the processor 620. A part of the memory 630 may further include a non-volatile random access memory (NVRAM). In a specific application, the device 600 may be built in or may be, for example, a base station device, or may include the transceiver 640, where the transceiver 640 accommodates a transmit circuit 641 and a receive circuit 642, so as to allow data transmission and receiving between the device 600 and a remote location. The transmit circuit 641 and the receive circuit 642 may be coupled to an antenna 600. All components of the device 600 may be coupled together by using the bus 610, where the bus 610 further includes a power bus, a control bus, and a status signal bus in addition to a data bus. However, for clarity, all kinds of buses are marked as the bus 610 in the diagrams. The device 600 may further include a processing unit used for processing a signal, and besides, may further include a power controller and a decoding processor. In specific different products, the decoder may be integrated with the processing unit.

The processor may implement or execute steps and logical block diagrams disclosed in the method embodiments of the present invention. A general purpose processor may be a microprocessor or the processor may also be any conventional processor, decoder, and the like. Steps of the methods disclosed with reference to the embodiments of the present invention may be directly executed and accomplished by means of a hardware processor, or may be executed and accomplished by using a combination of hardware and software modules in the decoding processor. The software module may be located in a mature storage medium in the field, such as a random access memory, a flash memory, a read-only memory, a programmable read-only memory, an electrically-erasable programmable memory or a register. The storage medium is located in the memory 630, and a decoding unit or processor reads information in the memory 630 and accomplishes the steps in the foregoing methods in combination with hardware of the decoding unit or processor.

The processor may be a central processing unit (Central Processing Unit, CPU for short), and the processor may also be another general purpose processor, a digital signal processor (DSP), an application-specific integrated circuit (ASIC), a field programmable gate array (FPGA) or another programmable logical apparatus, a discrete gate or transistor logic, or a discrete hardware component. The general purpose processor may be a microprocessor, or the processor may also be any conventional processor or the like.

The memory may include a read-only memory and a random access memory, and provide an instruction and data to the processor. A part of the memory may further include a non-volatile random access memory. For example, the memory may further store information about a device type.

The bus system may further include the power bus, the control bus, and the status signal bus in addition to the data bus. However, for clarity, all kinds of buses are marked as the bus system in the diagrams.

In an implementation, the steps of the method may be implemented by an integrated logical circuit of hardware in the processor, or by a software instruction. Steps of the methods disclosed with reference to the embodiments of the present invention may be directly executed and accomplished by means of a hardware processor, or may be executed and accomplished by using a combination of hardware and software modules in the processor. The software module may be located in a mature storage medium in the field, such as a random access memory, a flash memory, a read-only memory, a programmable read-only memory, an electrically-erasable programmable memory or a register. The storage medium is located in the memory, and a processor reads information in the memory and accomplishes the steps in the foregoing methods in combination with hardware of the processor. To avoid repetition, no specific description is provided herein again.

The multi-carrier communication device 600 according to this embodiment of the present invention may be corresponding to the user equipment UE (which, specifically, is a DC terminal) in the method in the foregoing embodiment of the present invention. In addition, all units, that is, modules, and the foregoing other operations and/or functions of the multi-carrier communication device 600 separately implement corresponding procedures in the method 200 in FIG. 3. For brevity, details are not repeated herein.

According to the multi-carrier communication device in this embodiment of the present invention, a network side device determines, according to signal quality measured by a UE, a third cell whose signal quality is the best among at least one cell of a second carrier, and instructs the UE to communicate with a first cell of the first carrier via the first carrier while communicating with the third cell via the second carrier. Therefore, even if antennas of the third cell and the first cell are at different geographic locations or coverage areas of the third cell and the first cell are different, the user equipment can establish downlink connections through the two cells, thereby improving subscriber experience.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A multi-carrier communication method, wherein the method comprises:

     a) determining, by a network side device, that a channel quality indicator, CQI, value of a UE in a second cell using a second carrier meets a preset condition; and
     b) in case of yes in step a), instructing, by the network side device, the UE to measure a signal quality of at least one cell of the second carrier; and acquiring, by the network side device, the signal quality of the at least one cell of the second carrier measured, according to the instruction of the network side device, by the UE (S110);
     c) determining (S120), by the network side device, according to the signal quality of the at least one cell of the second carrier measured by the UE, a third cell whose signal quality is the best among the at least one cell of the second carrier, wherein the third cell is a micro cell; and
     d) instructing (S130), by the network side device, the UE to communicate with the third cell via the second carrier while communicating with a first cell of a first carrier via the first carrier, wherein a frequency of the first carrier is different from a frequency of the second carrier, and the first cell is a macro cell.

2. A multi-carrier communication method, wherein the method comprises:

a) determining, by a network side device, that a relationship between a CQI value of a UE in a first cell using a first carrier and a CQI value of the UE in a second cell using a second carrier meets a preset condition;

b) in case of yes in step a) instructing, by the network side device, the UE to measure a signal quality of at least one cell of the second carrier; and acquiring, by the network side device, the signal quality of the at least one cell of the second carrier measured, according to the instruction of the network side device, by the UE;

c) determining (S120), by the network side device, according to the signal quality of the at least one cell of the second carrier measured by the UE, a third cell whose signal quality is the best among the at least one cell of the second carrier, wherein the third cell is a micro cell; and

d) instructing (S130), by the network side device, the UE to communicate with the third cell via the second carrier while communicating with the first cell of a first carrier via the first carrier, wherein a frequency of the first carrier is different from a frequency of the second carrier, and the first cell is a macro cell.

3. The method according to claim 1 or 2, the method further comprises:

   determining, by the network side device, that the UE is in a state that the UE communicates with the second cell of the second carrier via the second carrier while communicating with the first cell via the first carrier, wherein the second cell is the macro cell; and

   the instructing (S130), by the network side device, the UE to communicate with the third cell via the second carrier while communicating with the first cell of the first carrier via the first carrier comprises:

   instructing, by the network side device, the UE to hand over from the second cell to the third cell on the second carrier.

4. The method according to claim 2, wherein the determining, by the network side device, that the relationship between the CQI value of the UE in the first cell and the CQI value of the UE in the second cell meets the preset condition specifically comprises:

   acquiring, by the network side device, the CQI value of the UE in the first cell and the CQI value of the UE in the second cell;

   determining, by the network side device, that the CQI value of the UE in the second cell is less than a second preset threshold, and a difference obtained by subtracting the CQI value of the UE in the second cell from the CQI value of the UE in the first cell is greater than a third preset threshold.

5. The method according to any of the preceding claims, wherein the instructing, by the network side device, the UE to measure the signal quality of the at least one cell of the second carrier comprises:

   determining, by the network side device, a location of the UE within a second preset time;

   determining, by the network side device, that the UE is in a moving state according to the location within the second preset time; and

   instructing, by the network side device, the UE to measure the signal quality of the at least one cell of the second carrier when the UE is determined in a moving state.

6. The method according to claim 1 or 2, wherein before the instructing, by the network side device, the UE to communicate with the third cell via the second carrier while communicating with a first cell of the first carrier via the first carrier, the method further comprises:

   determining, by the network side device, that the UE is in a state that the UE communicates only with the first cell via the first carrier.

7. A multi-carrier communication apparatus (300) configured to perform any of the methods according to claims 1 - 6.

**Patentansprüche**

1. Mehrträgerkommunikationsverfahren, wobei das Verfahren umfasst:

   a) Bestimmen, durch eine netzwerkseitige Vorrichtung, dass ein Wert eines Kanalqualitätsindikators (Channel Quality Indicator, CQI) eines UE in einer zweiten Zelle unter Verwendung eines zweiten Trägers eine voreingestellte Bedingung erfüllt; und

   b) im Falle von Ja in Schritt a), Anweisen, durch die netzwerkseitige Vorrichtung, des UE, eine Signalqualität von mindestens einer Zelle des zweiten Trägers zu messen; und Erfassen, durch die netzwerkseitige Vorrichtung, der Signalqualität der mindestens einen Zelle des zweiten Trägers, die gemäß der Anweisung der netzwerkseitigen Vorrichtung durch das UE gemessen wird (S110);

c) Bestimmen (S120), durch die netzwerkseitige Vorrichtung, gemäß der Signalqualität der mindestens einen Zelle des zweiten Trägers, die von dem UE gemessen wird, einer dritten Zelle, deren Signalqualität die beste unter der mindestens einen Zelle des zweiten Trägers ist, wobei die dritte Zelle eine Mikrozelle ist; und

d) Anweisen (S130), durch die netzwerkseitige Vorrichtung, des UE, über den zweiten Träger mit der dritten Zelle zu kommunizieren, während es über den ersten Träger mit einer ersten Zelle eines ersten Trägers kommuniziert, wobei sich eine Frequenz des ersten Trägers von einer Frequenz des zweiten Trägers unterscheidet und die erste Zelle eine Makrozelle ist.

2.  Mehrträgerkommunikationsverfahren, wobei das Verfahren umfasst:

a) Bestimmen, durch eine netzwerkseitige Vorrichtung, dass eine Beziehung zwischen einem CQI-Wert eines UE in einer ersten Zelle unter Verwendung eines ersten Trägers und einem CQI-Wert des UE in einer zweiten Zelle unter Verwendung eines zweiten Trägers eine voreingestellte Bedingung erfüllt;

b) im Falle von Ja in Schritt a), Anweisen, durch die netzwerkseitige Vorrichtung, des UE, eine Signalqualität von mindestens einer Zelle des zweiten Trägers zu messen; und Erfassen, durch die netzwerkseitige Vorrichtung, der Signalqualität der mindestens einen Zelle des zweiten Trägers, die gemäß der Anweisung der netzwerkseitigen Vorrichtung durch das UE gemessen wird;

c) Bestimmen (S120), durch die netzwerkseitige Vorrichtung, gemäß der Signalqualität der mindestens einen Zelle des zweiten Trägers, die von dem UE gemessen wird, einer dritten Zelle, deren Signalqualität die beste unter der mindestens einen Zelle des zweiten Trägers ist, wobei die dritte Zelle eine Mikrozelle ist; und

d) Anweisen (S130), durch die netzwerkseitige Vorrichtung, des UE, über den zweiten Träger mit der dritten Zelle zu kommunizieren, während es über den ersten Träger mit der ersten Zelle eines ersten Trägers kommuniziert, wobei sich eine Frequenz des ersten Trägers von einer Frequenz des zweiten Trägers unterscheidet und die erste Zelle eine Makrozelle ist.

3.  Verfahren nach Anspruch 1 oder 2, das Verfahren ferner umfassend:

Bestimmen, durch die netzwerkseitige Vorrichtung, dass sich das UE in einem Zustand befindet, in dem das UE über den zweiten Träger mit der zweiten Zelle des zweiten Trägers kommuniziert, während es über den ersten Träger mit der ersten Zelle kommuniziert, wobei die zweite Zelle die Makrozelle ist; und

das Anweisen (S130), durch die netzwerkseitige Vorrichtung, des UE, über den zweiten Träger mit der dritten Zelle zu kommunizieren, während es über den ersten Träger mit der ersten Zelle des ersten Trägers kommuniziert, umfasst:

Anweisen, durch die netzwerkseitige Vorrichtung, des UE, den zweiten Träger von der zweiten Zelle an die dritte Zelle zu übergeben.

4.  Verfahren nach Anspruch 2, wobei das Bestimmen, durch die netzwerkseitige Vorrichtung, dass die Beziehung zwischen dem CQI-Wert des UE in der ersten Zelle und dem CQI-Wert des UE in der zweiten Zelle die voreingestellte Bedingung erfüllt, insbesondere umfasst:

Erfassen, durch die netzwerkseitige Vorrichtung, des CQI-Werts des UE in der ersten Zelle und des CQI-Werts des UE in der zweiten Zelle;

Bestimmen, durch die netzwerkseitige Vorrichtung, dass der CQI-Wert des UE in der zweiten Zelle kleiner als ein zweiter voreingestellter Schwellenwert ist, und eine Differenz, die durch Subtrahieren des CQI-Werts des UE in der zweiten Zelle von dem CQI-Wert des UE in der ersten Zelle erhalten wird, größer als ein dritter voreingestellter Schwellenwert ist.

5.  Verfahren nach einem der vorhergehenden Ansprüche, wobei das Anweisen, durch die netzwerkseitige Vorrichtung, des UE, die Signalqualität der mindestens einen Zelle des zweiten Trägers zu messen, umfasst:

Bestimmen, durch die netzwerkseitige Vorrichtung, eines Standorts des UE innerhalb einer zweiten voreingestellten Zeitraums;

Bestimmen, durch die netzwerkseitige Vorrichtung, dass sich das UE gemäß dem Standort innerhalb des zweiten voreingestellten Zeitraums in einem Bewegungszustand befindet; und

Anweisen, durch die netzwerkseitige Vorrichtung, des UE, die Signalqualität der mindestens einen Zelle des zweiten Trägers zu messen, wenn bestimmt wird, das sich das UE in einem Bewegungszustand befindet.

6. Verfahren nach Anspruch 1 oder 2, wobei vor dem Anweisen, durch die netzwerkseitige Vorrichtung, des UE, über den zweiten Träger mit der dritten Zelle zu kommunizieren, während es über den ersten Träger mit einer ersten Zelle des ersten Trägers kommuniziert, das Verfahren ferner umfasst:
Bestimmen, durch die netzwerkseitige Vorrichtung, dass sich das UE in einem Zustand befindet, in dem das UE nur über den ersten Träger mit der ersten Zelle kommuniziert.

7. Mehrträgerkommunikationsvorrichtung (300), die konfiguriert ist, um ein beliebiges der Verfahren gemäß den Ansprüchen 1 bis 6 durchzuführen.

**Revendications**

1. Procédé de communication à porteuses multiples, le procédé comprenant :

a) la détermination, à l'aide d'un dispositif côté réseau, qu'une valeur d'indicateur de qualité de canal, CQI, d'un UE dans une deuxième cellule utilisant une seconde porteuse, remplit une condition prédéfinie ; et
b) en cas de oui à l'étape a), l'instruction, par le dispositif côté réseau, à l'UE de mesurer une qualité de signal d'au moins une cellule de la seconde porteuse ; et l'acquisition, par le dispositif côté réseau, de la qualité de signal de l'au moins une cellule de la seconde porteuse mesurée, en fonction de l'instruction du dispositif côté réseau, par l'UE (S110) ;
c) la détermination (S 120), par le dispositif côté réseau, en fonction de la qualité de signal de l'au moins une cellule de la seconde porteuse mesurée par l'UE, d'une troisième cellule dont la qualité de signal est la meilleure parmi l'au moins une cellule de la seconde porteuse, la troisième cellule étant une microcellule ; et
d) l'instruction (S130), par le dispositif côté réseau, à l'UE de communiquer avec la troisième cellule via la seconde porteuse, tout en communiquant avec une première cellule d'une première porteuse via la première porteuse, une fréquence de la première porteuse étant différente d'une fréquence de la seconde porteuse, et la première cellule étant une macro cellule.

2. Procédé de communication à porteuses multiples, le procédé comprenant :

a) la détermination, par un dispositif côté réseau, qu'une relation entre une valeur de CQI d'un UE dans une première cellule utilisant une première porteuse et une valeur de CQI de l'UE dans une deuxième cellule utilisant une seconde porteuse remplit une condition prédéfinie ;
b) en cas de oui à l'étape a) l'instruction, par le dispositif côté réseau, à l'UE de mesurer une qualité de signal d'au moins une cellule de la seconde porteuse ; et l'acquisition, par le dispositif côté réseau, de la qualité de signal de l'au moins une cellule de la seconde porteuse mesurée, en fonction de l'instruction du dispositif côté réseau, par l'UE ;
c) la détermination (S 120), par le dispositif côté réseau, en fonction de la qualité de signal de l'au moins une cellule de la seconde porteuse mesurée par l'UE, d'une troisième cellule dont la qualité de signal est la meilleure parmi l'au moins une cellule de la seconde porteuse, la troisième cellule étant une microcellule ; et
d) l'instruction (S130), par le dispositif côté réseau, à l'UE de communiquer avec la troisième cellule via la seconde porteuse tout en communiquant avec la première cellule d'une première porteuse via la première porteuse, une fréquence de la première porteuse étant différente d'une fréquence de la seconde porteuse, et la première cellule étant une macro cellule.

3. Procédé selon la revendication 1 ou 2, le procédé comprenant en outre :

la détermination, par le dispositif côté réseau, que l'UE est dans un état dans lequel l'UE communique avec la deuxième cellule de la seconde porteuse via la seconde porteuse tout en communiquant avec la première cellule via la première porteuse, la deuxième cellule étant la macrocellule ; et
l'instruction (S130), par le dispositif côté réseau, à l'UE de communiquer avec la troisième cellule via la seconde porteuse tout en communiquant avec la première cellule de la première porteuse via la première porteuse comprenant :
l'instruction, par le dispositif côté réseau, à l'UE de passer de la deuxième cellule à la troisième cellule sur la seconde porteuse.

**4.** Procédé selon la revendication 2, la détermination, par le dispositif côté réseau, que la relation entre la valeur de CQI de l'UE dans la première cellule et la valeur de CQI de l'UE dans la deuxième cellule répondant à la condition prédéfinie comprenant spécifiquement :

l'acquisition, par le dispositif côté réseau, de la valeur de CQI de l'UE dans la première cellule et de la valeur de CQI de l'UE dans la deuxième cellule ;

la détermination, par le dispositif côté réseau, que la valeur de CQI de l'UE dans la deuxième cellule est inférieure à un deuxième seuil prédéfini, et qu'une différence obtenue en soustrayant la valeur de CQI de l'UE dans la deuxième cellule à la valeur de CQI de l'UE dans la première cellule est supérieure à un troisième seuil prédéfini.

**5.** Procédé selon l'une quelconque des revendications précédentes, l'instruction, par le dispositif côté réseau, à l'UE de mesurer la qualité du signal de l'au moins une cellule de la seconde porteuse comprenant :

la détermination, par le dispositif côté réseau, d'un emplacement de l'UE à l'intérieur d'un second temps prédéfini ;

la détermination, par le dispositif côté réseau, que l'UE est dans un état mobile en fonction de l'emplacement à l'intérieur du second temps prédéfini ; et

l'instruction, par le dispositif côté réseau à l'UE de mesurer la qualité du signal d'au moins une cellule de la seconde porteuse lorsque l'UE est déterminée dans un état mobile.

**6.** Procédé selon la revendication 1 ou 2, avant l'instruction, par le dispositif côté réseau, à l'UE de communiquer avec la troisième cellule via la seconde porteuse tout en communiquant avec une première cellule de la première porteuse via la première porteuse, le procédé comprenant en outre :

la détermination, par le dispositif côté réseau, que l'UE est dans un état dans lequel l'UE ne communique qu'avec la première cellule via la première porteuse.

**7.** Appareil de communication à porteuses multiples (300) configuré pour réaliser l'un quelconque des procédés selon les revendications 1 à 6.

F2

P1 P2

M2

F1

M1

FIG. 1a

F2

P1 P2

F1

M1

FIG. 1b

Base
station A

C                A                B

Base
station B

F1      F2                          F1      F2

X1                                        X2

Y1                                        Y2

FIG. 1c

<u>100</u>

A network side device acquires signal quality of at least
one cell of a second carrier measured by a user
equipment UE                                          S110

The network side device determines, according to the
signal quality of the at least one cell of the second
carrier measured by the UE, a third cell whose signal     S120
quality is the best among the at least one cell of the
second carrier

The network side device instructs the UE to
communicate with a first cell of the first carrier via the
first carrier while communicating with the third cell via   S130
the second carrier, where the first carrier is different
from the second carrier, and antennas of the third cell
and the first cell are at different geographic locations

FIG. 2

200

A user equipment UE reports signal quality of at least one cell of a second carrier to a network side device, so that the network side device determines a third cell whose signal quality is the best among the at least one cell of the second carrier and instructs the UE to communicate with a first cell of the first carrier via the first carrier while communicating with the third cell via the second carrier

S210

The UE communicates, according to the instruction of the network side device, with the first cell of the first carrier via the first carrier while communicating with the third cell via the second carrier, where the first carrier is different from the second carrier, and antennas of the third cell and the first cell are at different geographic locations

S220

FIG. 3

300                          300

Multi-carrier communication apparatus

Acquiring unit                310

Determining unit              320

Instructing unit              330

FIG. 4

400                           400

Multi-carrier
communication apparatus

Transceiver unit       410

Processing unit       420

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090270103 A1